(19) Europäisches Patentamt
European Patent Office
Office européen des brevets

(11) EP 4 583 561 A1

(12) EUROPEAN PATENT APPLICATION
published in accordance with Art. 153(4) EPC

(43) Date of publication:
09.07.2025 Bulletin 2025/28

(21) Application number: 23867366.9

(22) Date of filing: 13.09.2023

(51) International Patent Classification (IPC):
*H04W 24/02* (2009.01)

(52) Cooperative Patent Classification (CPC):
H04W 24/02; H04W 24/08

(86) International application number:
PCT/CN2023/118547

(87) International publication number:
WO 2024/061077 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.09.2022 CN 202211165120
30.05.2023 CN 202310630951

(71) Applicant: Huawei Technologies Co., Ltd.
Shenzhen, Guangdong 518129 (CN)

(72) Inventors:
• ZHANG, Xiaoyu
  Shenzhen, Guangdong 518129 (CN)
• WANG, Hui
  Shenzhen, Guangdong 518129 (CN)
• HU, Xingxing
  Shenzhen, Guangdong 518129 (CN)
• LIAO, Shuri
  Shenzhen, Guangdong 518129 (CN)
• DOU, Shengyue
  Shenzhen, Guangdong 518129 (CN)

(74) Representative: Gill Jennings & Every LLP
The Broadgate Tower
20 Primrose Street
London EC2A 2ES (GB)

(54) COMMUNICATION METHOD AND APPARATUS

(57) This application relates to the communication field, and discloses a communication method and apparatus. The method includes: A terminal receives first measurement timing configuration information from a network device, where the first measurement timing configuration information is used to configure a first cell list and M offsets corresponding to the first cell list, and the M offsets respectively correspond to M measurement occasions; and the terminal measures an SSB of each cell in the first cell list on the M measurement occasions, where the M measurement occasions include a first measurement occasion, and a first offset corresponding to the first measurement occasion is a time interval between a time domain start position of the first measurement occasion and a time domain start position of a measurement periodicity. In this way, because the first cell list may correspond to a plurality of offsets, a measurement occasion for measuring an SSB can be configured more accurately for the first cell list. Compared with a manner in which only one offset can be configured for one cell list, in this manner, duration for measuring the SSB by the terminal can be effectively reduced, and power consumption of the terminal can be reduced.

FIG. 8

**Description**

CROSS-REFERENCE TO RELATED APPLICATIONS

This application claims priority to Chinese Patent Application No. 202211165120.8, filed with the China National Intellectual Property Administration on September 23, 2022 and entitled "COMMUNICATION METHOD AND APPARATUS", which is incorporated herein by reference in its entirety; and claims priority to Chinese Patent Application No. 202310630951.6, filed with the China National Intellectual Property Administration on May 30, 2023 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

In a wireless communication system, a network device may send measurement configuration information to a terminal, so that the terminal can measure a synchronization signal block (synchronization signal block, SSB) based on the measurement configuration information, to implement mobility management. Because SSBs are not continuous in time domain, the terminal does not need to continuously search for and measure the SSBs in time domain, but measures the SSBs in a measurement time window in which the SSBs can be locked. Therefore, currently, an SSB-based measurement timing configuration (SSB-based measurement timing configuration, SMTC) is introduced in the measurement configuration information of the SSB, and the SMTC may be used to configure a measurement time window. In this way, the terminal may perform SSB measurement in the measurement time window configured by using the SMTC.

For a non-terrestrial network (non-terrestrial network, NTN), the NTN provides seamless coverage for the terminal by deploying a network device or some functions of the network device on a non-terrestrial device like a high-altitude platform or a satellite. However, the satellite is used as an example. Because a coverage area of the satellite is larger, hundreds or even thousands of SSB beams may be needed. Therefore, when the network device configures the measurement time window for the terminal in the foregoing manner, time for the terminal to measure the SSB is long, and power consumption of the terminal increases.

SUMMARY

This application provides a communication method and apparatus, to reduce, in an NTN, duration for measuring an SSB by a terminal, and reduce power consumption of the terminal.

According to a first aspect, an embodiment of this application provides a communication method. The method may be applied to a terminal or a module (for example, a chip) in the terminal. For example, the method is applied to the terminal. In the method, the terminal receives measurement configuration information from a network device, where the measurement configuration information includes first measurement timing configuration information, the first measurement timing configuration information is used to configure a first cell list and M offsets corresponding to the first cell list, the M offsets respectively correspond to M measurement occasions, and M is an integer greater than 1; and the terminal measures a synchronization signal block SSB of each cell in the first cell list on the M measurement occasions, where the M measurement occasions include a first measurement occasion, and a first offset corresponding to the first measurement occasion is a time interval between a time domain start position of the first measurement occasion and a time domain start position of a measurement periodicity.

In the foregoing method, because the first cell list may correspond to a plurality of offsets, a measurement occasion for measuring an SSB can be configured more accurately for the first cell list. Compared with a manner in which only one offset can be configured for one cell list, in this manner, duration for measuring the SSB by the terminal can be effectively reduced, and power consumption of the terminal can be reduced.

In a possible design, the method further includes: sending a measurement value of the SSB of each cell in the first cell list to the network device.

In this way, the terminal may report, to the network device, the measurement value of the SSB obtained through measurement, so that the network device performs mobility management on the terminal.

In a possible design, the first measurement timing configuration information is further used to configure a to-be-measured SSB corresponding to the first cell list. An index of the SSB of each cell in the first cell list measured on the M measurement occasions is the same as an index of the to-be-measured SSB corresponding to the first cell list.

In this way, a to-be-measured SSB may be independently configured for a cell list, so that a specific SSB of a specific cell or a specific cell list can be measured. This effectively reduces measurement overheads of the terminal.

In a possible design, the measurement configuration information further includes second measurement timing configuration information, and the second measurement timing configuration information is used to configure the measurement periodicity.

In a possible design, the second measurement timing configuration information is further used to configure first duration, and duration of each of the M measurement occasions is the first duration.

In a possible design, the second measurement timing configuration information is further used to configure N offsets, the N offsets respectively correspond to N measurement occasions, duration of each of the N measurement occasions is the first duration, and N is an integer greater than 1. The method further includes: measuring an SSB of at least one cell on the N measurement occasions, where the at least one cell includes a serving cell of the terminal. The N measurement occasions include a second measurement occasion, and a second offset corresponding to the second measurement occasion is a time interval between a time domain start position of the second measurement occasion and the time domain start position of the measurement periodicity.

In a possible design, the second measurement timing configuration information is further used to configure second duration and a third offset, the third offset corresponds to a third measurement occasion, and duration of the third measurement occasion is the second duration. The method further includes: measuring an SSB of a serving cell of the terminal on the third measurement occasion, and receiving downlink data of the serving cell on the third measurement occasion, where the third offset is a time interval between a time domain start position of the third measurement occasion and the time domain start position of the measurement periodicity.

In this way, in a satellite communication system, a channel between a satellite and a terminal on the ground is closer to a line of sight, and a beam direction in which the terminal receives an SSB of a service satellite is basically consistent with a beam direction in which the terminal receives downlink data of the service satellite, and both the beam directions are aligned with the service satellite. Therefore, when measuring the SSB of the service satellite, the terminal may further receive the downlink data, so that data transmission efficiency of the terminal can be improved.

In a possible design, the second duration is greater than 5 ms and less than or equal to duration of the measurement periodicity.

In a possible design, the first measurement timing configuration information is further used to configure third duration, and duration of each of the M measurement occasions is the third duration.

In a possible design, the second measurement timing configuration information is further used to configure a to-be-measured SSB of the serving cell. An index of the SSB of the serving cell measured on the N measurement occasions is the same as an index of the to-be-measured SSB of the serving cell.

In this way, the to-be-measured SSB may be independently configured for the serving cell, so that a specific SSB of the serving cell can be measured. This effectively reduces measurement overheads of the terminal.

According to a second aspect, an embodiment of this application provides a communication method. The method may be applied to a network device or a module (for example, a chip) in the network device. The method may alternatively be applied to a logical module or software that can implement all or some of functions of the network device. For example, the method is applied to the network device. In the method, the network device determines measurement configuration information; and sends the measurement configuration information to a terminal, where the measurement configuration information includes first measurement timing configuration information, the first measurement timing configuration information is used to configure a first cell list and M offsets corresponding to the first cell list, the M offsets respectively correspond to M measurement occasions, and M is an integer greater than 1. The M measurement occasions include a first measurement occasion, and a first offset corresponding to the first measurement occasion is a time interval between a time domain start position of the first measurement occasion and a time domain start position of a measurement periodicity.

In a possible design, the method further includes: receiving a measurement value of an SSB of each cell in the first cell list from the terminal.

In a possible design, the first measurement timing configuration information is further used to configure a to-be-measured SSB corresponding to the first cell list. An index of the SSB of each cell in the first cell list measured on the M measurement occasions is the same as an index of the to-be-measured SSB corresponding to the first cell list.

In a possible design, the measurement configuration information further includes second measurement timing configuration information, and the second measurement timing configuration information is used to configure the measurement periodicity.

In a possible design, the second measurement timing configuration information is further used to configure first duration, and duration of each of the M measurement occasions is the first duration.

In a possible design, the second measurement timing configuration information is further used to configure N offsets, the N offsets respectively correspond to N measurement occasions, duration of each of the N measurement occasions is the first duration, and N is an integer greater than 1. The method further includes: sending an SSB of at least one cell on the N measurement occasions, where the at least one cell includes a serving cell of the terminal. The N measurement occasions include a second measurement occasion, and a second offset corresponding to the second measurement occasion is a time interval between a time domain start position of the second measurement occasion and the time domain start position of the measurement periodicity.

In a possible design, the second measurement timing configuration information is further used to configure second duration and a third offset, the third offset corresponds to a third measurement occasion, and duration of the third measurement occasion is the second duration. The method further includes: sending an SSB of at least one cell on the third measurement occasion, and sending downlink data of the serving cell to the terminal on the third measurement occasion, where the third offset is a time interval between a time domain start position of the third measurement occasion and the time domain start position of the measurement periodicity.

In a possible design, the third duration is greater than 5 ms and less than or equal to duration of the measurement periodicity.

In a possible design, the first measurement timing configuration information is further used to configure third duration, and duration of each of the M measurement occasions is the third duration.

In a possible design, the second measurement timing configuration information is further used to configure a to-be-measured SSB of the serving cell. An index of an SSB of the serving cell measured on the N measurement occasions is the same as an index of the to-be-measured SSB of the serving cell.

In a possible design, the first cell list includes the serving cell of the terminal. The method further includes: obtaining location information of the terminal; determining, based on the location information of the terminal, a first SSB corresponding to a beam that covers the terminal, where the first SSB is the SSB of the serving cell; and determining the M offsets based on the first SSB.

In a possible design, the first cell list includes the serving cell of the terminal. The sending the measurement configuration information to a terminal includes: sending the measurement configuration information to the terminal by using a second SSB of the serving cell, where the M offsets are determined based on the second SSB.

It may be understood that the method described in the second aspect corresponds to the method described in the first aspect. Therefore, for beneficial effects of related technical features in the method described in the second aspect, refer to the first aspect. Details are not described again.

According to a third aspect, this application provides a communication apparatus. The communication apparatus has a function for implementing the first aspect or the second aspect. For example, the communication apparatus includes a corresponding module, unit, or means for performing an operation in the first aspect or the second aspect. The function, the unit, or the means may be implemented by software, or may be implemented by hardware, or may be implemented by hardware by executing corresponding software.

In a possible design, the communication apparatus includes a processing unit and a communication unit. The communication unit may be configured to receive and send signals, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to operations in the first aspect or the second aspect.

In a possible design, the communication apparatus includes a processor. The processor may be configured to be coupled to a memory. The memory may store a necessary computer program or instructions for implementing a function in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and a memory. The memory may store a necessary computer program or instructions for implementing a function in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In a possible design, the communication apparatus includes a processor and an interface circuit. The processor is configured to communicate with another apparatus via the interface circuit, and perform the method according to any possible design or implementation of the first aspect or the second aspect.

It may be understood that in the third aspect, the processor may be implemented by hardware or implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, this application provides a communication system. The communication system may include a terminal device and a network device. The terminal device is configured to perform the method according to any possible design of the first aspect, and the network device is configured to perform the method according to any possible design of the second aspect.

According to a fifth aspect, this application provides a computer-readable storage medium. The computer storage medium stores computer-readable instructions; and when a computer reads and executes the computer-readable instructions, the computer is enabled to perform the method according to any possible design of the first aspect or the second aspect.

According to a sixth aspect, this application provides a computer program product; and when a computer reads and executes the computer program product, the computer is enabled to perform the method according to any possible design of the first aspect or the second aspect.

According to a seventh aspect, this application provides a chip. The chip includes a processor, and the processor is coupled to a memory, and is configured to read and execute a software program stored in the memory, to implement the method according to any possible design of the first aspect or the second aspect.

## BRIEF DESCRIPTION OF DRAWINGS

FIG. 1 is a diagram of a communication system to which an embodiment of this application is applicable;

FIG. 2A is a diagram of a satellite communication system to which an embodiment of this application is applicable;

FIG. 2B is a diagram of another satellite communication system to which an embodiment of this application is applicable;

FIG. 3A is a diagram of an SSB according to an embodiment of this application;

FIG. 3B is a diagram of SSB sending according to an embodiment of this application;

FIG. 3C is a diagram of a time domain position of an SSB according to an embodiment of this application;

FIG. 4 is a diagram of a failure of SSB measurement of a neighboring satellite according to an embodiment of this application;

FIG. 5 is a diagram of an overall sending manner of 256 SSBs according to an embodiment of this application;

FIG. 6 is a diagram of a coverage area of a satellite according to an embodiment of this application;

FIG. 7 is a diagram of a measurement time window according to an embodiment of this application;

FIG. 8 is a schematic flowchart corresponding to a communication method according to an embodiment of this application;

FIG. 9 is a diagram of a measurement occasion configured in Implementation 1 according to an embodiment of this application;

FIG. 10 is a diagram of a beam between a satellite and a terminal according to an embodiment of this application;

FIG. 11 is a diagram of a measurement occasion configured in Implementation 3 according to an embodiment of this application;

FIG. 12A is a diagram of coverage overlapping between a serving cell and a cell 1a according to an embodiment of this application;

FIG. 12B is a diagram of an overlapping area between different satellites according to an embodiment of this application;

FIG. 13 is a possible example block diagram of an apparatus according to an embodiment of this application;

FIG. 14 is a diagram of a structure of a terminal according to an embodiment of this application; and

FIG. 15 is a diagram of a structure of a network device according to an embodiment of this application.

## DESCRIPTION OF EMBODIMENTS

The following describes technical solutions in embodiments of this application with reference to accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" are used to represent giving an example, an illustration, or a description. Any embodiment or design solution described as an "example" in this application should not be explained as being more preferred or having more advantages than another embodiment or design solution. Exactly, the word "example" is used to present a concept in a specific manner. In embodiments of this application, "of (of)", "corresponding (corresponding, relevant)", and "corresponding (corresponding)" may be interchangeably used sometimes. It should be noted that expressed meanings are consistent when differences of the words are not emphasized.

A communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges.

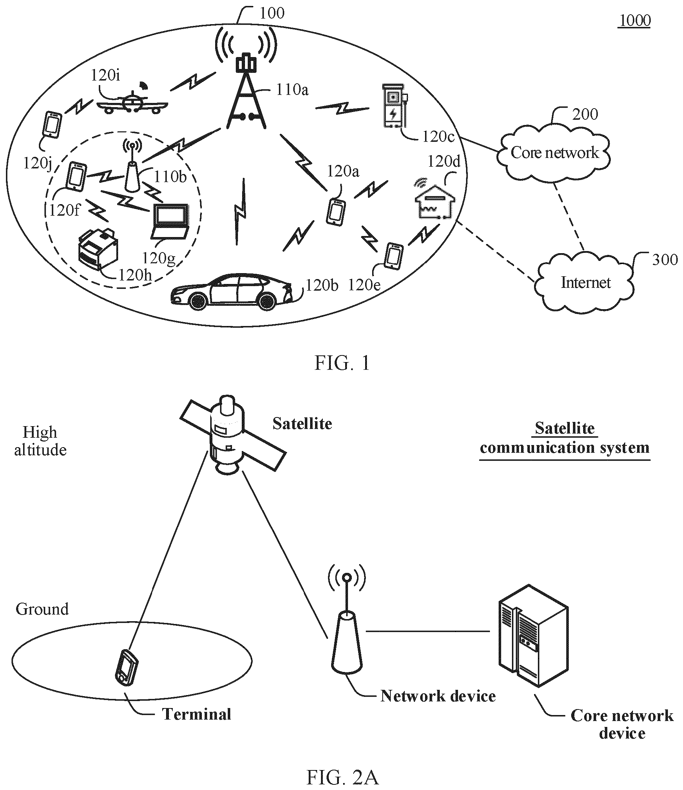

For ease of understanding embodiments of this application, a communication system shown in FIG. 1 is first used as an example to describe in detail a communication system to which embodiments of this application are applicable. As shown in FIG. 1, the communication system 1000 includes a radio access network 100 and a core network 200. Optionally, the communication system 1000 may further include an internet 300. The radio access network 100 may include at least one radio access network device, for example, 110a and 110b in FIG. 1, and may further include at least one terminal, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle.

(1) Terminal

The terminal may be a terminal that accesses the foregoing communication system and that has a wireless transceiver function, or a chip or a chip system that may be disposed in the terminal. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer with a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness equipment) in a smart home (smart home), a vehicle-mounted terminal, or an RSU with a terminal function.

(2) Network device

The network device may include a radio access network device, and the radio access network device may also be referred to as an access network device. The network device is a device that is located on a network side of the foregoing communication system and that has a wireless transceiver function, or a chip or a chip system that may be disposed in the device.

For example, the network device in embodiments of this application may be an access point (access point, AP), for example, a home gateway, a router, a server, a switch, or a bridge, in a Wi-Fi system, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a wireless relay node, a wireless backhaul node, or a transmission point (transmission and reception point, TRP, or transmission point, TP). Alternatively, the network device may be a next generation NodeB (next generation NodeB, gNB) in a 5G system, or a network node that forms a gNB, for example, a central unit (central unit, CU), a distributed unit (distributed unit, DU), or a roadside unit (roadside unit, RSU) with a base station function, or may be a satellite or a base station in various forms in the future. In addition, the network device may be a macro base station (for example, 110a in FIG. 1), may be a micro base station or an indoor base station (for example, 110b in FIG. 1), or may be a relay node, a donor node, or the like.

In FIG. 1, the terminal may be connected to the network device, and the network device may be connected to a core network device in the core network. The core network device and the network device may be different physical devices independent of each other; functions of the core network device and logical functions of the network device may be integrated into a same physical device; or some functions of the core network device and some functions of the network device may be integrated into one physical device. Terminals may be connected to each other in a wired or wireless manner, and network devices may be connected to each other in a wired or wireless manner. FIG. 1 is merely a diagram. The communication system may further include another device, which is not shown in FIG. 1.

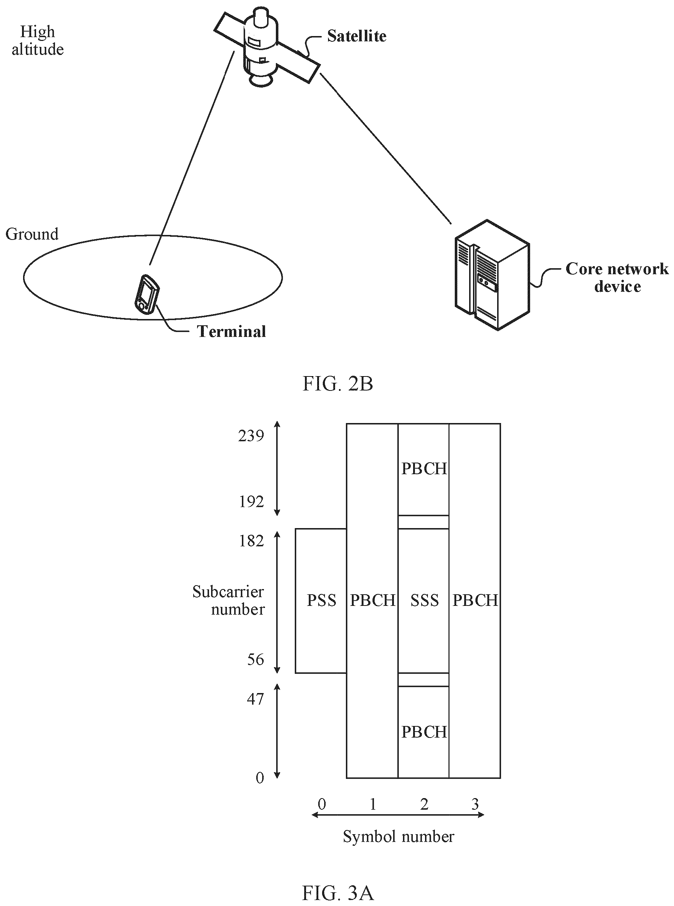

There may be a plurality of application scenarios of the communication system shown in FIG. 1. For example, the communication system may be applied to a terrestrial network (terrestrial network, TN) scenario (that is, a terrestrial communication system), or may be applied to a non-terrestrial network (NTN) scenario. An NTN may be a satellite communication system, a high altitude platform station (high altitude platform station, HAPS) communication system, or another non-terrestrial communication system. The following uses the satellite communication system as an example to describe two possible satellite communication systems with reference to FIG. 2A and FIG. 2B.

FIG. 2A is a diagram of a satellite communication system to which an embodiment of this application is applicable. The communication system includes a core network device, a network device, a satellite, and at least one terminal. In an example, the core network device, the network device, and the terminal in FIG. 2A are located on the ground, and the satellite is located at a high altitude. Communication between the network device and the terminal is performed through signal forwarding via the satellite. To be specific, the satellite may receive a signal from the network device and forward the signal to the ground to form a satellite cell, to provide service coverage for the terminal on the ground. In this case, the satellite is equivalent to a relay node or a transponder. Therefore, this scenario may also be referred to as a transparent (transparent) forwarding form of the satellite.

FIG. 2B is a diagram of another satellite communication system to which an embodiment of this application is applicable. The communication system includes a core network device, a satellite, and at least one terminal. In an example, the core network device and the terminal in FIG. 2B are located on the ground, and the satellite is located at a high altitude. A difference from the satellite communication system shown in FIG. 2A lies in that, in the satellite communication system shown in FIG. 2B, a network device, for example, a base station, may be deployed on the satellite. The satellite may generate a cell signal, and forward the cell signal to the ground to form a satellite cell, to provide a service coverage area for the terminal on the ground. Therefore, this scenario may also be referred to as a satellite regenerative (regenerative) form.

One satellite corresponds to one network device. For example, in FIG. 2A, the satellite may be configured to forward a signal of a network device corresponding to the satellite. In FIG. 2B, a network device corresponding to the satellite is deployed on the satellite. In embodiments of this application, a satellite corresponding to a serving network device of the terminal may be referred to as a service satellite, and a coverage area of the service satellite may include a serving cell of the terminal, and optionally, further includes one or more neighboring cells of the serving cell. A satellite corresponding to a neighboring network device of the serving network device may be referred to as a neighboring satellite, and a coverage area of the neighboring satellite may include one or more neighboring cells of the serving cell. For example, when the terminal is in an idle state, the serving cell of the terminal may be a cell on which the terminal currently camps; or when the terminal is in a connected state, the serving cell of the terminal may be a cell to which the terminal is currently connected.

Although only one terminal is shown in FIG. 2A and FIG. 2B, it should be understood that one network device, one satellite, or one core network device may provide a service for one or more terminals. A quantity of core network devices, a quantity of network devices, a quantity of satellites, and a quantity of terminals included in the satellite communication system are not limited in embodiments of this application. The satellite in embodiments of this application may be a high-earth orbit (geostationary earth orbit, GEO) satellite, or may be a low earth orbit (low earth orbit, LEO) satellite. The low earth orbit satellite may also be referred to as a near-earth orbit satellite.

The following first describes related technical features in embodiments of this application. It should be noted that these explanations are intended to facilitate understanding of embodiments of this application, but should not be considered as a limitation on the scope of the protection claimed in this application.

I. Mobility management

Due to movement of a terminal, the terminal performs access selection and handover between different cells, and the selection and handover generally depend on the mobility management. The mobility management mainly refers to a measurement procedure related to radio resource management (radio resource management, RRM) and a mobility signaling procedure triggered based on a measurement result.

In the mobility management, a network device delivers measurement configuration information to the terminal, so that the terminal can measure a reference signal based on the measurement configuration information, to obtain the measurement result. The measurement result may be reference signal received power (reference signal received power, RSRP), reference signal received quality (reference signal received quality, RSRQ), or a signal to interference plus noise ratio (signal to interference plus noise ratio, SINR).

There may be two types of reference signals used for the mobility management, for example, an SSB and a channel state information-reference signal (channel state information-reference signal, CSI-RS). In embodiments of this application, SSB-based mobility management is mainly studied.

II. SSB

In a 5G mobile communication system, the synchronization signal block is generally sent together with a main information block (main information block, MIB) on a physical broadcast channel (physical broadcast channel, PBCH), to form an SS/PBCH block. The SSB described below in embodiments of this application may also be an SS/PBCH block. A synchronization signal (synchronization signal block, SS) may include a primary synchronization signal (primary synchronization signal, PSS) and a secondary synchronization signal (secondary synchronization signal, SSS).

As shown in FIG. 3A, in time domain, one SSB occupies four orthogonal frequency division multiplexing (orthogonal frequency division multiplexing, OFDM) symbols (symbols), which are symbols 0 to 3. In frequency domain, one SSB occupies 20 resource blocks (resource blocks, RBs) (where one RB includes 12 subcarriers), that is, 240 subcarriers, and subcarrier numbers are 0 to 239. The PSS is located on 127 subcarriers in a middle of the symbol 0, and the SSS is located on 127 subcarriers in a middle of the symbol 2. To protect the PSS and the SSS, there are different guard subcarriers respectively. The guard subcarriers are not used to carry the signals. Subcarriers are separately reserved on two sides of the SSS as guard subcarriers. For example, blank areas on the two sides of the SSS in FIG. 3A are guard subcarriers. The PBCH occupies all subcarriers of the symbol 1 and the symbol 3, and occupies some of remaining subcarriers other than subcarriers occupied by the SSS in all subcarriers of the symbol 2 (namely, subcarriers other than the guard subcarriers in the remaining subcarriers).

The PSS may be used to transmit a cell identity, and the SSS may be used to transmit a cell group identity. The cell identity and the cell group identity jointly determine a plurality of physical cell identities (physical cell identities, PCIs) in a 5G communication system. Once a terminal successfully finds the PSS and the SSS, the terminal knows a physical cell identity of this 5G carrier, and therefore, has a capability of parsing a system message included in the SSB.

III. Time domain position and frequency domain position of an SSB

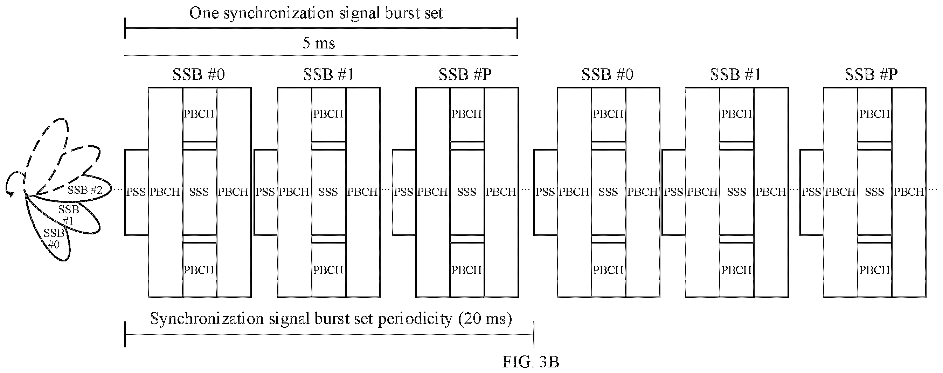

A network device uses a plurality of antennas to enhance coverage. However, using the plurality of antennas causes the antennas to radiate excessively narrow beams, and it is difficult for a single narrow beam to cover an entire cell. In addition, due to a hardware limitation, the network device usually cannot simultaneously send signals by using a plurality of beams to cover the entire cell. Therefore, a beam scanning technology is introduced in a 5G communication system, in other words, the network device may send signals at different moments by using different beams. For example, for one cell, the network device may send SSBs at different moments by using different beams, to complete broadcast beam coverage of the cell, as shown in FIG. 3B.

A set of SSBs sent by the network device in one beam scanning process may be referred to as a synchronization signal burst set (synchronization signal burst set, SS burst set). An SS burst set periodicity may be configured as 5 ms (milliseconds), 10 ms, 20 ms, 40 ms, 80 ms, 160 ms, or the like. A maximum of four, eight, or 64 SSBs are included in one SS burst set periodicity, and each SS burst set is always in a time interval of 5 ms. For a diagram of the SS burst set, refer to FIG. 3B. In FIG. 3B, an example in which an SS burst set periodicity is 20 ms and one SS burst set includes P SSBs is used.

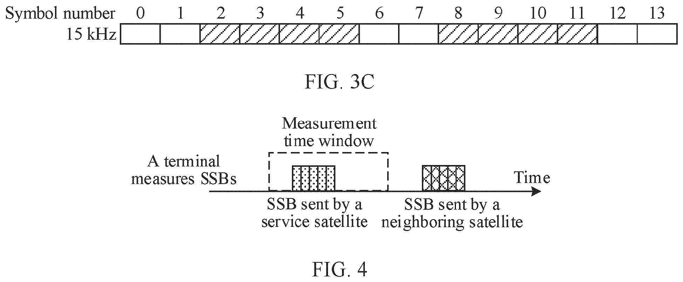

In time domain, a protocol specifies relationships between different subcarrier spacings (subcarrier spacings, SCSs) and time domain patterns (patterns) of SSBs. FIG. 3C shows a time domain pattern of SSBs. FIG. 3C shows a time domain pattern of SSBs included in one slot when a subcarrier spacing is 15 kHz. It can be learned that one slot includes two SSBs, and boxes marked with slashes in FIG. 3C represent symbols occupied by the SSBs.

In frequency domain, one cell corresponds to one frequency band, and one frequency band may include a plurality of frequencies. For one cell, the network device may send an SSB on one or more frequencies included in a frequency band corresponding to the cell. Frequency bands corresponding to different cells overlap. Therefore, SSBs of different cells may be sent on a same frequency. During RRM measurement, if center frequencies of SSBs of two cells are the same and subcarrier spacings are also the same, measurement between the two cells is referred to as intra-frequency measurement; otherwise, measurement between the two cells is referred to as inter-frequency measurement.

IV. Measurement configuration information of an SSB

A network device may send the measurement configuration information of the SSB to a terminal, to enable the terminal to perform SSB measurement in an idle state and a connected state. For the terminal in the idle state, the measurement configuration information may be included in an intraFreqCellReselectionInfo field in a system information block (system information block, SIB) 2 and an InterFreqCarrierFreqInfo field in a SIB 4. For the terminal in the connected state, the measurement configuration information may be included in a MeasObjectNR field in an RRC message.

It can be learned from the foregoing descriptions of the time domain position of the SSB that, SSBs are not continuous in time domain, and the terminal does not need to continuously search for and measure the SSBs in time domain, but performs an operation in a time window in which these SSBs can be locked. Therefore, in an NR protocol, an SSB-based measurement timing configuration (SSB-based measurement timing configuration, SMTC) is introduced in the measurement configuration information of the SSB, and the SMTC may be used to configure a measurement time window. The network device may configure a corresponding SMTC for each to-be-measured frequency, so that the terminal can perform SSB measurement in a measurement time window configured by using the SMTC of the frequency. As described above, for an intra-frequency measurement scenario, the terminal may measure SSBs of a plurality of cells in a measurement time window configured by using an SMTC of one frequency.

Currently, the protocol defines three SMTCs: an SMTC 1, an SMTC 2, and an SMTC 3. The SMTC 1 is defined as a main SMTC.

(1) The SMTC 1 mainly includes three parameters: a measurement periodicity (periodicity), an offset (offset), and duration (duration). The measurement periodicity indicates a frequency at which the terminal measures an SSB. The offset indicates a time domain start position of a measurement time window, and a maximum offset does not exceed the measurement periodicity. The duration indicates duration for the terminal to measure the SSB, that is, duration of the measurement time window. It may be understood that a specific cell is not limited by the SMTC 1. In other words, the terminal may measure SSBs of all possible cells (including a serving cell) in a measurement time window configured by using the SMTC 1.

(2) The SMTC 2 mainly includes a cell list (pci-List) and a measurement periodicity. Compared with the SMTC 1, the SMTC 2 measures only SSBs of some specific cells, and the measurement periodicity is generally shorter than the measurement periodicity configured for the SMTC 1, but the SMTC 2 and SMTC 1 share a same offset and same duration.

(3) A measurement periodicity, an offset, duration, and a cell list are independently configured for the SMTC 3, and an index of a to-be-measured SSB of a to-be-measured frequency may be further specified. The SMTC is generally used in an integrated access backhaul (integrated access backhaul, IAB) scenario.

V. SMTC of a satellite communication system

Compared with a terrestrial communication system, in the satellite communication system, to overcome path loss impact caused by a transmission distance and ensure communication service quality, a satellite generally uses a large-scale antenna array, to provide a higher array gain. However, in this case, a main lobe of a beam is narrower. For example, a coverage radius of a 3 dB (dB) beamwidth is only a dozen kilometers. If a service range of the satellite is hundreds of thousands of square kilometers, thousands of beams are needed to implement seamless coverage of the service range of the satellite by using narrow beams. Further, even if specific broadening processing is performed on the beam, to ensure a gain level, hundreds of beams are needed to implement coverage. Therefore, different from the terrestrial communication system in which a service range of a network device can be covered by a maximum of eight SSB beams or 64 SSB beams, the satellite communication system may require hundreds or even thousands of SSB beams.

It is considered that in the satellite communication system, delays at which SSBs sent by a service satellite and a neighboring satellite arrive at a terminal are different. If a same offset is used, the SSB sent by the neighboring satellite may not be measured in a measurement time window configured by using the SMTC, and consequently, measurement fails, as shown in FIG. 4. Therefore, in a protocol, an SMTC 4 is added for a current situation that different satellites have different delays. The SMTC 4 includes a cell list and an offset. One offset may be configured for each cell list, and a maximum of four cell lists are allowed to be configured. Compared with an SMTC 1, a network side may calculate arrival delays of different satellites based on location information of the satellites and location information of the terminal, and configure a corresponding cell list and a corresponding offset in the SMTC 4, to ensure that the SSB sent by the neighboring satellite can be detected by the terminal at a corresponding time location. The SMTC 4 and the SMTC 1 share a measurement periodicity and duration.

In other words, for the satellite communication system, the network device may configure the SMTC 1 for the terminal for each to-be-measured frequency, so that the terminal can measure an SSB of at least one cell based on the SMTC 1, where the at least one cell includes a serving cell of the terminal. Alternatively, the network device may configure the SMTC 1 and the SMTC 4 for the terminal, so that the terminal can measure an SSB of at least one cell based on the SMTC 1, and measure an SSB of each cell in at least one cell list based on the SMTC 4.

In the following embodiments of this application, an SMTC corresponding to one to-be-measured frequency is used as an example for description. When there are a plurality of to-be-measured frequencies, an implementation may be performed with reference to the following embodiments.

Based on the foregoing descriptions, in the satellite communication system, because the satellite moves at a high speed, the terminal may frequently switch between a plurality of satellites. Therefore, mobility management is particularly important. However, due to excessive SSB beams of the satellites, duration for measuring SSBs by the terminal is greatly prolonged in mobility management.

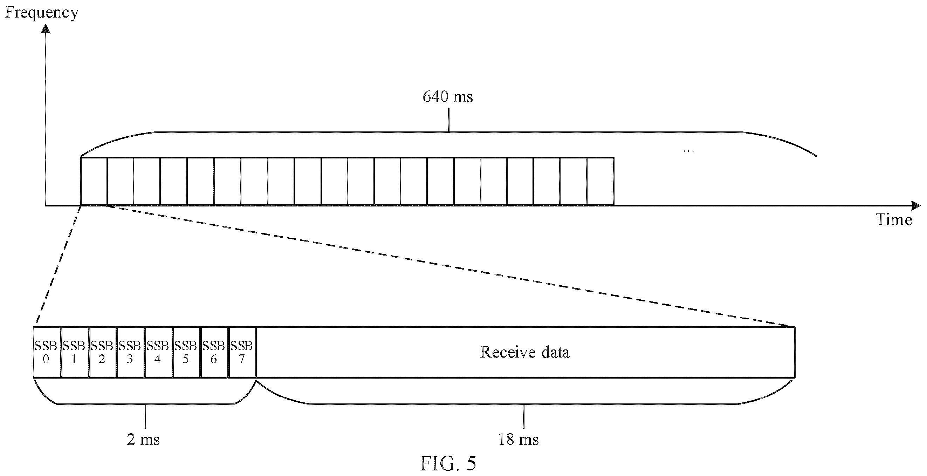

Sending of 256 SSB beams is used as an example. Based on an SSB sending pattern configured in a current protocol, eight SSBs (to be specific, an SSB 0 to an SSB 7) are sent in the first 2 ms of every 20 ms. In this case, an overall sending manner of the 256 SSBs is shown in FIG. 5. The 256 SSB beams are divided into 32 groups in total, every eight SSBs form one group, and one group lasts for 20 ms. In this case, the groups last for 640 ms in total. In each group, the SSBs are included only in the first 2 ms, and the terminal may receive data in the remaining 18 ms. In this case, a measurement periodicity configured by the network device may be an integer multiple of 640 ms. In embodiments of this application, that the measurement periodicity is 640 ms is used as an example.

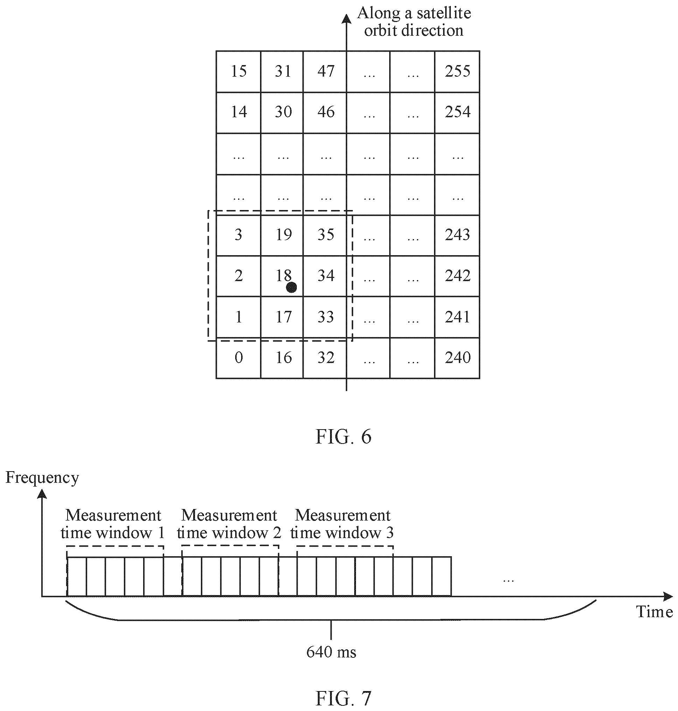

Refer to FIG. 6. It is assumed that a coverage area of a satellite is evenly divided into 256 areas, and each SSB beam covers one area. An area 0 represents an area covered by an SSB 0 beam, an area 1 represents an area covered by an SSB 1 beam, and so on. For example, the satellite is a service satellite of a terminal, the coverage area of the satellite includes one or more cells, and each cell may include at least one of the 256 areas. For example, the coverage area of the satellite includes one cell, and the cell is a serving cell of the terminal. When the terminal is in a dot location (namely, a coverage area of an SSB 18) in FIG. 6, considering movement of the terminal, indexes of SSBs that may need to be measured by the terminal include {1, 2, 3}, {17, 18, 19}, and {33, 34, 35} around the dot. {1, 2, 3}, {17, 18, 19}, and {33, 34, 35} are respectively distributed in a first group, a third group, and a fifth group. Because an interval between the groups is 20 ms, duration including these SSBs is approximately 100 ms.

In this case, to enable the terminal to measure the SSBs identified by the indexes such as {1, 2, 3}, {17, 18, 19}, and {33, 34, 35}, a network device may configure an SMTC 1 for the terminal. For example, in the SMTC 1, a measurement periodicity is 640 ms, an offset is 0, and duration (or time length) is 100 ms. A measurement time window (referred to as a measurement time window 1) configured by using the SMTC 1 is shown in FIG. 7. In this way, a proportion of time for measuring the SSBs by the terminal in one measurement periodicity based on the SMTC 1 is approximately 100/640=15.6%.

The following is an example of a format of measurement configuration information (that is, the SMTC 1) sent by the network device to the terminal:

```
SSB-MTC::={
      periodicity AndOffset {sf640, sf0 } //The measurement periodicity is 640 ms, and the
offset is 0.
      duration {sf100} //The duration is 100 ms.
  }
```

Optionally, the network device may further configure an SMTC 4 for the terminal, and the SMTC 4 may be used to measure an SSB of a cell of a neighboring satellite. For example, a coverage area of one neighboring satellite includes one cell. When the terminal needs to measure SSBs of two neighboring satellites (that is, two cells), the two cells may respectively belong to two cell lists (to be specific, a cell list 1 and a cell list 2). If SSBs that need to be measured in each cell list are also in three groups, for example, an offset corresponding to the cell list 1 is 120 ms, and an offset corresponding to the cell list 2 is 240 ms, two measurement time windows (referred to as a measurement time window 2 and a measurement time window 3) configured by using the SMTC 4 may be shown in FIG. 7. In this way, a proportion of time for measuring the SSBs by the terminal in one measurement periodicity based on the SMTC 4 is approximately 200/640=31.3%. In this way, a proportion of total time occupied by the terminal to measure the SSBs in one measurement periodicity based on the SMTC 1 and the SMTC 4 is (100+200)/640=46.9%.

The following is an example of a format of the measurement configuration information (including the SMTC 1 and the SMTC 4) sent by the network device to the terminal:

```
SSB-MTC::={
        periodicity AndOffset {sf640, sf0 } //The measurement periodicity is 640 ms, and the
   offset is 0.
        duration {sf100} //The duration is 100 ms.
   }
SSB-MTC4-r17::={
      pci-List-r17 {Cell list 1}
      offset-r17 {sf120}//The offset corresponding to the cell list 1 is 120 ms.
   }
SSB-MTC4::={
      pci-List-r17 {Cell list 2}
      offset-r17 {sf240}//The offset corresponding to the cell list 2 is 240 ms.
   }
```

In the foregoing example, the terminal needs to measure SSBs of two neighboring satellites. When the terminal needs to measure SSBs of four neighboring satellites, assuming that cells of the four neighboring satellites belong to four cell lists, a maximum proportion of total time occupied by the terminal to measure the SSBs in one measurement periodicity based on the SMTC 1 and the SMTC 4 may be (100+400)/640=78%.

In this way, it can be learned that when the network device configures the measurement time window for the terminal in the foregoing manner, time for measuring the SSBs by the terminal is long, and power consumption overheads of the terminal significantly increase. Further, a protocol specifies that the terminal cannot receive downlink data in SSB measurement time (that is, the measurement time window). Therefore, the long time for measuring the SSBs by the terminal further causes a great limitation on data transmission of the terminal.

Based on this, in embodiments of this application, the measurement configuration information is studied, to reduce duration for measuring the SSBs by the terminal, and reduce power consumption of the terminal.

For example, a communication method provided in embodiments of this application may include: A network device sends measurement configuration information to a terminal, where the measurement configuration information may include first measurement timing configuration information and/or second measurement timing configuration information; and correspondingly, the terminal receives the measurement configuration information, and measures an SSB based on the measurement configuration information. The first measurement timing configuration information may be obtained by improving an SMTC 4 in an existing protocol, and the second measurement timing configuration information may be obtained by improving an SMTC 1 in the existing protocol. Therefore, the measurement timing configuration information in embodiments of this application may also be replaced with an SMTC.

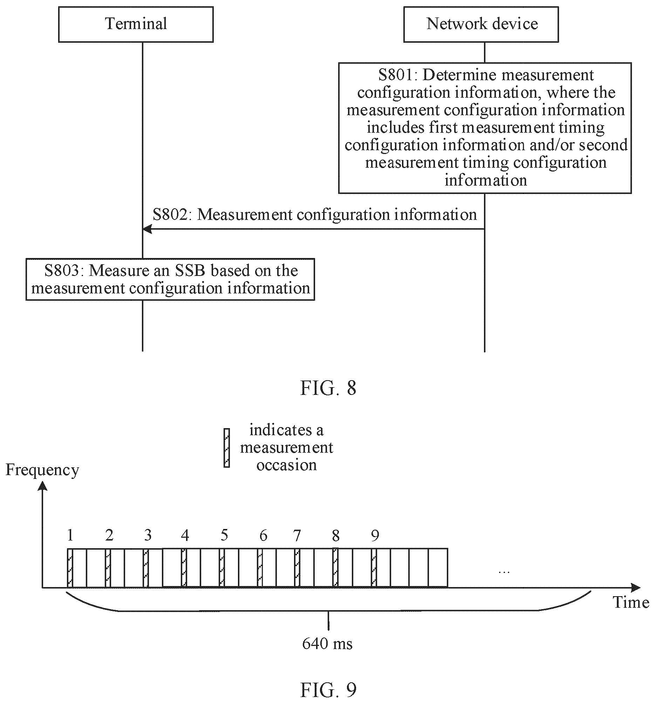

FIG. 8 is a schematic flowchart corresponding to a communication method according to an embodiment of this application. As shown in FIG. 8, the method includes the following steps.

S801: A network device determines measurement configuration information, where the measurement configuration information includes first measurement timing configuration information and/or second measurement configuration information.

In this embodiment of this application, an example in which the measurement configuration information includes the first measurement timing configuration information and the second measurement timing configuration information is used for description.

S802: The network device sends the measurement configuration information to a terminal, and correspondingly, the terminal receives the measurement configuration information.

S803: The terminal measures an SSB based on the measurement configuration information.

The following describes the first measurement timing configuration information and the second measurement timing configuration information with reference to Implementation 1 to Implementation 3.

(1) Implementation 1

In Implementation 1, the first measurement timing configuration information is used to configure at least one cell list and at least one offset corresponding to each cell list. For example, the at least one cell list includes a first cell list, at least one offset corresponding to the first cell list includes M offsets, and the M offsets respectively correspond to M measurement occasions. The M measurement occasions include a first measurement occasion, a first offset corresponding to the first measurement occasion is a time interval between a time domain start position of the first measurement occasion and a time domain start position of a measurement periodicity, and M is an integer greater than 1. A cell in the first cell list may include a serving cell of the terminal and/or a neighboring cell of the serving cell. In addition, different cell lists in the at least one cell list may correspond to a same quantity or different quantities of offsets. For example, if the at least one cell list further includes a second cell list, a quantity of offsets corresponding to the second cell list may be equal to M, or may not be equal to M. This is not specifically limited.

The second measurement timing configuration information is used to configure a measurement periodicity, first duration, and N offsets, where the N offsets respectively correspond to N measurement occasions, duration of each of the N measurement occasions is the first duration, and N is an integer greater than 1. In this case, the first measurement timing configuration information and the second measurement timing configuration information share the measurement periodicity and the first duration, in other words, duration of each of the M measurement occasions is the first duration.

The first measurement timing configuration information may be understood as an improved SMTC 4. Currently, in an SMTC 4 defined in a protocol, one cell list corresponds only to one offset. In the improved SMTC 4 in this embodiment of this application, one cell list may correspond to a plurality of offsets. The second measurement timing configuration information may be understood as an improved SMTC 1. Currently, an SMTC 1 defined in the protocol includes only one offset. The improved SMTC 1 in this embodiment of this application may include a plurality of offsets.

The example in FIG. 6 is still used. In Example 1, a format of the measurement configuration information provided in this embodiment of this application may be:

```
SSB-MTC::={//Second measurement timing configuration information
      periodicityAndOffsetList {sf640, sf0, sf40, sf80} //The measurement periodicity is 640
       ms, and the offsets are 0 ms, 40 ms, and 80 ms.
      duration {sf2} //The duration is 2 ms.
}
SSB-MTC4-r17::={//First measurement timing configuration information
      pci-List-r17 {Cell list 1}
      offset1-List-r17 {sf120, sf160, sf200}//An offset 1 corresponding to the cell list 1 is 120
ms, an offset 2 corresponding to the cell list 1 is 160 ms, and an offset 3 corresponding to the
cell list 1 is 200 ms.
}
SSB-MTC4-r17::={//First measurement timing configuration information
      pci-List-r17 {Cell list 2}
      offset1-List-r17 {sf240, sf280, sf320}//An offset 1 corresponding to the cell list 2 is 240
ms, an offset 2 corresponding to the cell list 2 is 280 ms, and an offset 3 corresponding to the
cell list 2 is 320 ms.
}
```

In Example 2, a format of the measurement configuration information provided in this embodiment of this application may be:

```
SSB-MTC::={//Second measurement timing configuration information
      periodicity AndOffsetList {sf640, sf0, sf40, sf80} //The measurement periodicity is
640
        ms, and the offsets are 0 ms, 40 ms, and 80 ms.
      duration {sf2} //The duration is 2 ms.
  }
SSB-MTC4-r17::={//First measurement timing configuration information
      pci-List-r17 {Cell list 1}
      offset1-r17 {sf120}//An offset 1 corresponding to the cell list 1 is 120 ms.
  }
SSB-MTC4-r17::={//First measurement timing configuration information
      pci-List-r17 {Cell list 1}
      offset2-r17 {sf160}//An offset 2 corresponding to the cell list 1 is 160 ms.
  }
SSB-MTC4-r17::={//First measurement timing configuration information
      pci-List-r17 {Cell list 1}
      offset3-r17 {sf200}//An offset 3 corresponding to the cell list 1 is 200 ms.
  }
SSB-MTC4-r17::={//First measurement timing configuration information
      pci-List-r17 {Cell list 2}
      offset1-r17 {sf240}//An offset 1 corresponding to the cell list 2 is 240 ms.
  }
SSB-MTC4-r17::={//First measurement timing configuration information
      pci-List-r17 {Cell list 2}
      offset2-r17 {sf280}//An offset 2 corresponding to the cell list 2 is 280 ms.
  }
SSB-MTC4-r17::={//First measurement timing configuration information
      pci-List-r17 {Cell list 2}
      offset3-r17 {sf320}//An offset 3 corresponding to the cell list 2 is 320 ms.
  }
```

In the foregoing Example 1, a quantity of offsets corresponding to a cell list is increased in the SSB-MTC4-r17 field. In the foregoing Example 2, a quantity of offsets corresponding to a cell list is increased by increasing a quantity of SSB-MTC4-r17 fields. In an existing protocol, a maximum of four SSB-MTC4-r17 fields can be configured. In this embodiment of this application, a limitation on the quantity of SSB-MTC4-r17 fields may be canceled. In other words, the quantity of SSB-MTC4-r17 fields configured in this embodiment of this application may be greater than 4.

For the foregoing two examples, after receiving the measurement configuration information, the terminal may measure, based on the measurement configuration information, SSBs on nine measurement occasions (to be specific, a measurement occasion 1 to a measurement occasion 9) shown in FIG. 9. The offset of 0 ms corresponds to the measurement occasion 1. The offset of 40 ms corresponds to the measurement occasion 2. The offset of 80 ms corresponds to the measurement occasion 3. The offset of 120 ms corresponds to the measurement occasion 4. The offset of 160 ms corresponds to the measurement occasion 5. The offset of 200 ms corresponds to the measurement occasion 6. The offset of 240 ms corresponds to the measurement occasion 7. The offset of 280 ms corresponds to the measurement occasion 8. The offset of 320 ms corresponds to the measurement occasion 9. Duration of each of the measurement occasion 1 to the measurement occasion 9 is 2 ms configured based on the second measurement timing configuration information.

Specifically, the terminal may measure an SSB of at least one cell on the measurement occasion 1 to the measurement occasion 3 based on the second measurement timing configuration information, where the at least one cell includes a serving cell. Because the second measurement timing configuration information does not limit a specific cell, in addition to an SSB of the serving cell, the terminal may further measure an SSB of another cell on the measurement occasion 1 to the measurement occasion 3. For example, indexes of SSBs of the serving cell measured by the terminal on the measurement occasion 1 to the measurement occasion 3 may include {1, 2, 3, 17, 18, 19, 33, 34, 35}. In addition, based on the first measurement timing configuration information, the terminal may measure an SSB of each cell in the cell list 1 on the measurement occasion 4 to the measurement occasion 6, and measure an SSB of each cell in the cell list 2 on the measurement occasion 7 to the measurement occasion 9.

In other words, the network device configures more offsets and shorter duration, so that the terminal can perform a plurality of times of short-time measurement. Compared with the solution in FIG. 7 in which duration for measuring the SSBs by the terminal in one measurement periodicity is equal to a sum of duration of the three measurement time windows, that is, 300 ms, in FIG. 9, duration for measuring the SSBs by the terminal in one measurement periodicity is equal to a sum of the duration of the nine measurement occasions, that is, 18 ms. Therefore, duration for measuring the SSBs by the terminal can be significantly reduced, power consumption of the terminal is reduced, and data transmission efficiency of the terminal is improved.

(2) Implementation 2

A difference between Implementation 2 and Implementation 1 lies in that, in Implementation 1, the second measurement timing configuration information is used to configure the N offsets; and in Implementation 2, the second measurement timing configuration information is used to configure one offset.

The example in FIG. 6 is still used. In an example, a format of the measurement configuration information provided in this embodiment of this application may be:

```
SSB-MTC::={//Second measurement timing configuration information
     periodicity AndOffset {sf640, sf0 } //A measurement periodicity is 640 ms, and the offset
is 20 ms.
     duration {sf2} //The duration is 2 ms.
}
SSB-MTC4-r17::={//First measurement timing configuration information
     pci-List-r17 {Cell list 0}
     offset1-List-r17 {sf40, sf80}//An offset 1
corresponding to the cell list 0 is 40 ms, and an
offset 2 corresponding to the cell list 0 is 80 ms.
SSB-MTC4-r17::={//First measurement timing configuration information
     pci-List-r17 {Cell list 1}
     offset1-List-r17 {sf120, sf160, sf200}//An offset 1 corresponding to the cell list 1 is 120
ms, an offset 2 corresponding to the cell list 1 is 160 ms, and an offset 3 corresponding to the
cell list 1 is 200 ms.
}
SSB-MTC4-r17::={//First measurement timing configuration information
     pci-List-r17 {Cell list 2}
     offset1-List-r17 {sf240, sf280, sf320}//An offset 1 corresponding to the cell list 2 is 240
ms, an offset 2 corresponding to the cell list 2 is 280 ms, and an offset 3 corresponding to the
cell list 2 is 320 ms.
}
```

The cell list 0 may include a serving cell of the terminal, and optionally, may further include a neighboring cell of the serving cell.

Implementation 2 is compared with Implementation 1. In Implementation 1, three offsets corresponding to the serving cell are configured in the second measurement timing configuration information; and in Implementation 2, one offset corresponding to the serving cell is configured in the second measurement timing configuration information, and the other two offsets corresponding to the serving cell are configured in the first measurement timing configuration information. For content other than the difference in Implementation 2, refer to Implementation 1. In Implementation 2, a format of an SMTC 1 in an existing protocol does not need to be modified.

(3) Implementation 3

In Implementation 3, the first measurement timing configuration information is used to configure at least one cell list and at least one offset corresponding to each cell list. In addition, the first measurement timing configuration information is further used to configure third duration, and duration of each of M measurement occasions is the third duration.

The second measurement timing configuration information is used to configure a measurement periodicity, second duration, and one offset. The second duration may be greater than 5 ms and less than or equal to duration of the measurement periodicity.

In this case, the first measurement timing configuration information and the second measurement timing configuration information share the measurement periodicity.

Optionally, in this embodiment of this application, a limitation on downlink scheduling may be canceled in the second duration. In other words, the terminal may further receive downlink data in the second duration, to improve data transmission efficiency of the terminal.

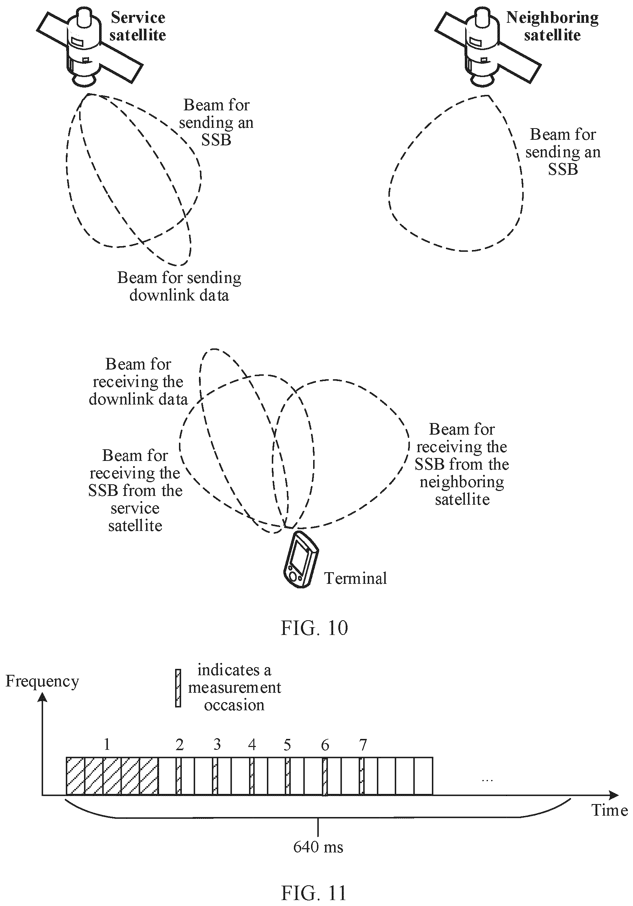

A reason is as follows: Generally, a beam used by the network device to send an SSB is different from a beam for sending the downlink data. For example, a width of the beam for sending the SSB is greater than a width of the beam for sending the downlink data. Considering that a ground communication system is greatly affected by an obstacle, there is a large difference between a beam for receiving the SSB and a beam for receiving the downlink data. Therefore, an existing protocol specifies that the terminal cannot receive the downlink data in a measurement time window. However, refer to FIG. 10. In a satellite communication system, a channel between a satellite and a terminal on the ground is closer to a line of sight, and a beam direction in which the terminal receives an SSB of a service satellite is basically consistent with a beam direction in which the terminal receives downlink data of the service satellite, and both the beam directions are aligned with the service satellite. Therefore, a scheduling limitation does not need to be performed on SSB measurement and downlink data receiving of the service satellite. However, there is generally a large difference between a beam direction for receiving an SSB of a neighboring satellite and a beam direction for receiving downlink data. Therefore, when measuring the SSB of the neighboring satellite, the terminal cannot receive the downlink data.

For example, in a TS38.133 protocol, the following scheduling limitation may be performed for intra-frequency measurement and inter-frequency measurement of an SSB: "Only in duration of an SMTC 4, on to-be-measured SSB symbols and on a previous symbol and a next symbol of the to-be-measured consecutive SSB symbols, the terminal does not expect to transmit a physical uplink control channel (physical uplink control channel, PUCCH)/a physical uplink data channel (physical uplink shared channel, PUSCH)/a channel sounding reference signal (sounding reference signal, SRS) or receive a physical downlink control channel (physical downlink control channel, PDCCH), a physical downlink data channel (physical downlink shared channel, PDSCH)/a tracking reference signal (tracking reference signal, TRS)/a channel state information-reference signal (channel state information-reference signal, CSI-RS) used for channel quality indication (channel quality indication, CQI) measurement". In other words, in this embodiment of this application, the scheduling limitation is performed on the terminal only in the duration of the SMTC 4, and this is different from a case, in the existing protocol, in which the scheduling limitation is performed on the terminal in duration of each SMTC.

The example in FIG. 6 is still used. A format of the measurement configuration information provided in this embodiment of this application may be:

```
SSB-MTC::={//Second measurement timing configuration information
      periodicityAndOffset {sf640, sf0 } //The measurement periodicity is 640 ms, and the
offset is 0 ms.
      duration {sf100} //The duration is 100 ms.
  }
SSB-MTC4-r17::={//First measurement timing configuration information
      pci-List-r17 {Cell list 1}
      offset1-List-r17 {sf120, sf160, sf200}//An offset 1 corresponding to the cell list 1 is 120
ms, an offset 2 corresponding to the cell list 1 is 160 ms, and an offset 3 corresponding to the
cell list 1 is 200 ms.
      duration {sf2} //The duration is 2 ms.
}
SSB-MTC4-r17::={//First measurement timing configuration information
      pci-List-r17 {Cell list 2}
      offset1-List-r17 {sf240, sf280, sf320}//An offset 1 corresponding to the cell list 2 is 240
ms, an offset 2 corresponding to the cell list 2 is 280 ms, and an offset 3 corresponding to the
cell list 2 is 320 ms.
      duration {sf2} //The duration is 2 ms.
  }
```

For the foregoing example, after receiving the measurement configuration information, the terminal may measure, based on the measurement configuration information, SSBs on seven measurement occasions (to be specific, a measurement occasion 1 to a measurement occasion 7) shown in FIG. 11. The offset of 0 ms corresponds to the measurement occasion 1. The offset of 120 ms corresponds to the measurement occasion 2. The offset of 160 ms corresponds to the measurement occasion 3. The offset of 200 ms corresponds to the measurement occasion 4. The offset of 240 ms corresponds to the measurement occasion 5. The offset of 280 ms corresponds to the measurement occasion 6. The offset of 320 ms corresponds to the measurement occasion 7. Duration of the measurement occasion 1 is 100 ms configured based on the second measurement timing configuration information, and duration of each of the measurement occasion 2 to the measurement occasion 7 is 2 ms configured based on the first measurement timing configuration information. It may be understood that the foregoing descriptions are provided by using an example in which the duration corresponding to the cell list 1 and the duration corresponding to the cell list 2 are the same (both are 2 ms). In another possible example, the duration corresponding to the cell list 1 and the duration corresponding to the cell list 2 may alternatively be different.

Specifically, the terminal may measure an SSB of at least one cell on the measurement occasion 1 based on the second measurement timing configuration information, where the at least one cell includes a serving cell. In addition, based on the first measurement timing configuration information, the terminal may measure an SSB of each cell in the cell list 1 on the measurement occasion 2 to the measurement occasion 4, and measure an SSB of each cell in the cell list 2 on the measurement occasion 5 to the measurement occasion 7.

Compared with the solution in FIG. 7 in which duration for measuring the SSBs by the terminal in one measurement periodicity is equal to a sum of duration of the three measurement time windows, that is, 300 ms, in FIG. 11, duration for measuring the SSBs by the terminal in one measurement periodicity is equal to a sum of the duration of the seven measurement occasions, that is, 112 ms. Therefore, duration for measuring the SSBs by the terminal can be significantly reduced. In addition, because a scheduling limitation on the terminal device is canceled, the terminal can receive downlink data on a first measurement occasion of the measurement periodicity. This can effectively improve data transmission efficiency of the terminal.

(4) Implementation 4

In Implementation 4, the first measurement timing configuration information is used to configure at least one cell list, an initial offset corresponding to each cell list, and a to-be-measured SSB corresponding to each cell list. A cell list 1 is used as an example. Assuming that the cell list 1 includes a cell 1a and a cell 1b, an initial offset corresponding to the cell list 1 is a difference between a delay in which an SSB 0 of the cell 1a or the cell 1b arrives at the terminal and a delay in which an SSB 0 of a serving cell arrives at the terminal. When the cell list 1 is a first cell list, a to-be-measured SSB corresponding to the cell list 1 is used to determine M offsets corresponding to the cell list 1. For example, if indexes of to-be-measured SSBs corresponding to the cell list 1 include {14, 15, 30, 31, 46, 47}, the terminal may determine, based on the indexes of the to-be-measured SSBs and an SSB sending pattern (as shown in FIG. 6), at least one group (for example, a second group, a fourth group, and a sixth group) to which the SSBs whose indexes are {14, 15, 30, 31, 46, 47} belong, and then may determine that the M offsets corresponding to the cell list 1 are respectively (20*2+x1) ms, (20*4+x1) ms, and (20*6+x1) ms, where x1 is the initial offset corresponding to the cell list 1.

The second measurement timing configuration information is used to configure a measurement periodicity, fourth duration, a first initial offset, and a to-be-measured SSB of the serving cell (or a cell of a service satellite, where the cell of the service satellite may include the serving cell and a neighboring cell, and the serving cell is used as an example herein). The first initial offset may be 0 ms, and the to-be-measured SSB of the serving cell is used to determine N offsets. For example, if indexes of to-be-measured SSBs of the serving cell include {1, 2, 3, 17, 18, 19, 33, 34, 35}, the terminal may determine, based on the indexes of the to-be-measured SSBs and an SSB sending pattern (as shown in FIG. 6), that the SSBs whose indexes are {1, 2, 3, 17, 18, 19, 33, 34, 35} are distributed in a first group, a third group, and a fifth group, and then may determine that the N offsets are respectively 0 ms, 40 ms, and 80 ms. The fourth duration may be greater than 5 ms and less than or equal to duration of the measurement periodicity. For example, the fourth duration may be 150 ms.

The example in FIG. 6 is still used. A format of the measurement configuration information provided in this embodiment of this application may be:

```
SSB-MTC::={//Second measurement timing configuration information
      periodicityAndOffset {sf640, sf0 } //The measurement periodicity is 640 ms, and the
initial offset is 0 ms.
      duration {sf150} //The duration is 150 ms.
       ssb-ToMeasure {Indexes of the to-be-measured SSBs, for example, 1, 2, 3, 17, 18, 19,
33, 34, and 35}
   }
SSB-MTC4-r17::={//First measurement timing configuration information
      pci-List-r17 {Cell list 1}
      offset1-r17 {sfx1}//The initial offset corresponding to the cell list 1 is x1 ms.
      ssb-ToMeasure {Indexes of to-be-measured SSBs, for example, i1, i2, i3, and i4}
}
SSB-MTC4-r17::={//First measurement timing configuration information
      pci-List-r17 {Cell list 2}
      offset1-r17 {sfx2}//An initial offset corresponding to the cell list 2 is x2 ms.
      ssb-ToMeasure {Indexes of to-be-measured SSBs, for example, j 1, j2, j3, j4, and j5}
```

From a perspective of the network device, for example, for the cell list 1, the cell list 1 includes the cell 1a and the cell 1b, and the network device determines that SSBs that need to be measured by the terminal include an SSB i1 and an SSB i2 of the cell 1a and an SSB i2, an SSB i3, and an SSB i4 of the cell 1b. In this case, the indexes of the to-be-measured SSBs corresponding to the cell list 1 may include {i1, i2, i3, i4}. In other words, the indexes of the to-be-measured SSBs corresponding to the cell list 1 are a union set of indexes of to-be-measured SSBs of all cells in the cell list.

From a perspective of the terminal, after the indexes of the to-be-measured SSBs are configured, the terminal may determine, based on the indexes of the to-be-measured SSBs of the serving cell, offsets respectively corresponding to a measurement occasion 1 to a measurement occasion 3, and measure the SSBs of the serving cell on the measurement occasion 1 to the measurement occasion 3, where the indexes of the measured SSBs of the serving cell are {1, 2, 3, 17, 18, 19, 33, 34, 35}. Duration of the measurement occasion 1 to the measurement occasion 3 may be determined based on the indexes of the to-be-measured SSBs of the serving cell. The measurement occasion 1 is used as an example. Because the terminal only needs to measure SSBs whose indexes are {1, 2, 3} on the measurement occasion 1, the duration of the measurement occasion 1 may be less than 2 ms (because SSBs whose indexes are 0 to 7 are included in duration of 2 ms, and the terminal needs to measure only the SSBs whose indexes are {1, 2, 3}, the duration of the measurement occasion 1 may be less than 2 ms). In addition, for example, the cell list 1 includes the cell 1a and the cell 1b. The terminal may determine, based on {i1, i2, i3, i4}, offsets respectively corresponding to a measurement occasion 4 to a measurement occasion 6, and may measure an SSB i1, an SSB i2, an SSB i3, and an SSB i4 of the cell 1a and an SSB i1, an SSB i2, an SSB i3, and an SSB i4 of the cell 1b on the measurement occasion 4 to the measurement occasion 6. For example, the cell list 2 includes a cell 2a and a cell 2b. The terminal may determine, based on {j 1, j2, j3, j4, j5}, offsets respectively corresponding to a measurement occasion 7 to a measurement occasion 9, and may measure an SSB j1, an SSB j2, an SSB j3, an SSB j4, and an SSB j5 of the cell 2a and an SSB j1, an SSB j2, an SSB j3, an SSB j4, and an SSB j5 of the cell 2b on the measurement occasion 7 to the measurement occasion 9. For duration of the measurement occasion 4 to the measurement occasion 9, refer to the descriptions of the duration of the measurement occasion 1. Details are not described again.

In other words, in Implementation 4, the network device may configure long duration and an initial offset for the terminal device in the second measurement timing configuration information. For example, the long duration is 150 ms, and the duration is 0 ms. In this case, the terminal may measure, based on each ssb-ToMeasure in the first 150 ms of each measurement periodicity, SSBs on one or more measurement occasions included in the 150 ms.

For ssb-ToMeasure, in an existing protocol, the network device is allowed to specify an index of a to-be-measured SSB to the terminal by using ssb-ToMeasure. However, only one measurement object can be configured for intra-frequency measurement of the serving cell and the neighboring cell (where the measurement object may include a to-be-measured frequency), and only one ssb-ToMeasure corresponding to the to-be-measured frequency can be configured for the measurement object. Therefore, ssb-ToMeasure needs to include indexes of all to-be-measured SSBs of the serving cell and the neighboring cell. In other words, ssb-ToMeasure needs to include a union set of the indexes of the to-be-measured SSBs of the serving cell and the indexes of the to-be-measured SSBs of the neighboring cell. For example, if the indexes of the to-be-measured SSBs of the serving cell include {0, 1, 2, 3}, and the indexes of the to-be-measured SSBs of the neighboring cell include {6, 7, 8, 9, 10}, indexes of to-be-measured SSBs in ssb-ToMeasure include {0, 1, 2, 3, 6, 7, 8, 9, 10}. Considering that indexes of to-be-measured SSBs of different cells may be different, ssb-ToMeasure may include indexes of a large quantity of SSBs, and the terminal cannot determine whether these SSBs are SSBs of the serving cell or SSBs of the neighboring cell. Therefore, the terminal measures the SSBs whose indexes are {0, 1, 2, 3, 6, 7, 8, 9, 10} for the serving cell, and measures the SSBs whose indexes are {0, 1, 2, 3, 6, 7, 8, 9, 10} for the neighboring cell. Consequently, measurement overheads of the terminal are large. However, in the manner in this embodiment of this application, ssb-ToMeasure may be independently configured for the serving cell and/or a cell list, so that a specific SSB of a specific cell or a specific cell list can be measured. This effectively reduces the measurement overheads of the terminal.

It may be understood that the configuration of ssb-ToMeasure in Implementation 4 may be implemented in combination with any one of the foregoing Implementation 1 to Implementation 3, for example, implemented in combination with Example 1 in Implementation 1. In this case, a format of the measurement configuration information provided in this embodiment of this application may be:

```
SSB-MTC::={//Second measurement timing configuration information
      periodicity AndOffsetList {sf640, sf0, sf40, sf80} //The measurement periodicity is 640
         ms, and the offsets are 20 ms, 40 ms, and 80 ms.
      duration {sf2} //The duration is 2 ms.
       ssb-ToMeasure {Indexes of the to-be-measured SSBs, for example, 1, 2, 17, 18, 33, and
34}
}
SSB-MTC4-r17::={//First measurement timing configuration information
      pci-List-r17 {Cell list 1}
      offset1-List-r17 {sf120, sf160, sf200}//An offset 1 corresponding to the cell list 1 is 120
ms, an offset 2 corresponding to the cell list 1 is 160 ms, and an offset 3 corresponding to the
cell list 1 is 200 ms.
      ssb-ToMeasure {Indexes of the to-be-measured SSBs, for example, i1, i2, and i3}

}
SSB-MTC4-r17::={//First measurement timing configuration information
      pci-List-r17 {Cell list 2}
      offset1-List-r17 {sf240, sf280, sf320}//An offset 1 corresponding to the cell list 2 is 240
ms, an offset 2 corresponding to the cell list 2 is 280 ms, and an offset 3 corresponding to the
cell list 2 is 320 ms.
      ssb-ToMeasure {Indexes of the to-be-measured SSBs, for example, j 1, j2, j3, and j4}
  }
```

From a perspective of the terminal, after the indexes of the to-be-measured SSBs are configured, based on the three offsets configured based on the second measurement timing configuration information, the indexes of the SSBs of the serving cell measured by the terminal on the measurement occasion 1 to the measurement occasion 3 may include {1, 2, 17, 18, 33, 34} (where this is different from Example 1 in Implementation 1 in which when the indexes of the to-be-measured SSBs are not configured, the indexes of the SSBs of the serving cell measured by the terminal on the measurement occasion 1 to the measurement occasion 3 include {1, 2, 3, 17, 18, 19, 33, 34, 35}). In addition, for example, the cell list 1 includes the cell 1a and the cell 1b. The terminal may measure, based on the three offsets corresponding to the cell list 1, the SSB i1, the SSB i2, and the SSB i3 of the cell 1a and the SSB i1, the SSB i2, and the SSB i3 of the cell 1b on the measurement occasion 4 to the measurement occasion 6. For example, the cell list 2 includes the cell 2a and the cell 2b. The terminal may measure, based on the three offsets corresponding to the cell list 1, the SSB j1, the SSB j2, the SSB j3, and the SSB j4 of the cell 2a and the SSB j1, the SSB j2, the SSB j3, and the SSB j4 of the cell 2b on the measurement occasion 7 to the measurement occasion 9.

In other words, the cell list 1 is used as an example. When the indexes of the to-be-measured SSBs corresponding to the cell list 1 are not configured, the terminal may measure all possible SSBs of the cell 1a and the cell 1b on a plurality of measurement occasions corresponding to the cell list 1. When the indexes of the to-be-measured SSBs corresponding to the cell list 1 are configured, the terminal may measure SSBs of the cell 1a and the cell 1b whose indexes are {i1, i2, i3} on a plurality of measurement occasions corresponding to the cell list 1.

The foregoing is described by using an example in which the measurement configuration information includes the first measurement timing configuration information and the second measurement timing configuration information. In another possible embodiment, the measurement configuration information may include the first measurement timing configuration information or the second measurement timing configuration information. For example, the measurement configuration information includes the second measurement timing configuration information described in the foregoing Implementation 1, Implementation 2, or Implementation 3, but does not include the first measurement timing configuration information. For another example, the measurement configuration information includes the first measurement timing configuration information described in the foregoing Implementation 1, Implementation 2, or Implementation 3, but does not include the second measurement timing configuration information. In this case, the first measurement timing configuration information may be further used to configure a measurement periodicity (and duration of a measurement occasion), or the measurement periodicity (and the duration of the measurement occasion) is predefined in a protocol.

The network device described in FIG. 8 is a serving network device of the terminal. The terminal may be a terminal in a connected state, or may be a terminal in an idle state. The following separately describes the terminal in the connected state and the terminal in the idle state.

(1) Terminal in the connected state

For the terminal in the connected state, the serving network device may obtain location information of the terminal. For example, after establishing a connection to the network device, the terminal may report the location information of the terminal to the serving network device. Therefore, in S801, the serving network device may determine the measurement configuration information based on the location information of the terminal.

Specifically, for the second measurement configuration information, the serving network device may determine, based on the location information of the terminal, an SSB (for example, an SSB 18) corresponding to a beam that covers the terminal, and determine, based on the SSB 18, indexes (for example, {1, 2, 3, 17, 18, 19, 33, 34, 35}) of SSBs of a serving cell that need to be measured by the terminal, to determine N offsets (where for example, the N offsets are 0 ms, 40 ms, and 80 ms) or one offset (for example, 0 ms).

For the first measurement configuration information, a cell list 1 is used as an example. For example, the cell list 1 includes a cell 1a of a satellite 1 and a cell 1b of a satellite 2, the satellite 1 corresponds to a network device 1, and the satellite 2 corresponds to a network device 2. After obtaining the location information of the terminal, the serving network device may separately send the location information of the terminal to the network device 1 and the network device 2. In this way, the network device 1 may determine, based on the location information of the terminal, an SSB corresponding to a beam that covers the terminal, and determine an index of an SSB of the cell 1a that needs to be measured by the terminal, to determine, based on a difference (that is, an initial offset corresponding to the cell 1a) between a delay in which an SSB 0 sent by the satellite 1 arrives at the terminal and a delay in which an SSB 0 sent by a service satellite arrives at the terminal, M offsets (where for example, the M offsets are 120 ms, 160 ms, and 200 ms) corresponding to the cell 1a. Similarly, the network device 2 may determine M offsets corresponding to the cell 1b. Assuming that distances between the satellite 1 and the terminal and between the satellite 2 and the terminal are the same, the M offsets corresponding to the cell 1a are the same as the M offsets corresponding to the cell 1b. Further, the network device 1 sends the M offsets corresponding to the cell 1a to the serving network device, and the network device 2 sends the M offsets corresponding to the cell 1b to the serving network device. Because the M offsets corresponding to the cell 1a are the same as the M offsets corresponding to the cell 1b, the serving network device may configure the cell 1a and the cell 1b in one cell list, and offsets corresponding to the cell list are the M offsets corresponding to the cell 1a or the cell 1b.

It may be understood that, the foregoing descriptions are provided by using an example in which a cell included in the cell list 1 is a cell of a neighboring satellite. When the cell list 1 includes a serving cell (or a cell of a service satellite, where the cell of the service satellite may include the serving cell and a neighboring cell, and the serving cell is used as an example herein), the serving network device may determine, based on the location information of the terminal, M offsets corresponding to the serving cell (that is, the cell list 1).

In S802, the serving network device may send the measurement configuration information to the terminal by using terminal dedicated signaling (for example, RRC signaling). Further, in S803, the terminal may measure the SSB based on the measurement configuration information.

Optionally, the method shown in FIG. 8 may further include: The terminal sends, to the serving network device, a measurement result of the SSB obtained through measurement. For example, the measurement configuration information may further include a measurement reporting condition. Therefore, when the measurement reporting condition is satisfied, the terminal may report the measurement result of the SSB to the serving network device. For details, refer to a conventional technology. This is not limited in this embodiment of this application.

(2) Terminal in the idle state

For the terminal in the idle state, the serving network device cannot obtain location information of the terminal. In this case, assuming that SSBs of a serving cell include an SSB 0 to an SSB 255, in S801, the serving network device may determine measurement configuration information 0 by assuming that the terminal is located in a coverage area of a beam corresponding to the SSB 0 (in other words, the SSB 0 is an optimal SSB 0 of the terminal), determine measurement configuration information 1 by assuming that the terminal is located in a coverage area of a beam corresponding to the SSB 1, determine measurement configuration information 2 by assuming that the terminal is located in a coverage area of a beam corresponding to the SSB 2, and so on. In other words, the serving network device may traverse possible locations of the terminal to determine a plurality of pieces of measurement configuration information. Measurement configuration information 18 determined by the serving network device by assuming that the terminal is located in a coverage area of a beam corresponding to the SSB 18 may include the foregoing first measurement timing configuration information and/or second measurement timing configuration information. For a specific determining manner, refer to the descriptions of the terminal in the connected state.

In a possible implementation, in S802, the serving network device may send the measurement configuration information 0 by using the SSB 0, send the measurement configuration information 1 by using the SSB 1, send the measurement configuration information 2 by using the SSB 2, ..., and send measurement configuration information 255 by using the SSB 255. In other words, the serving network device sends different measurement configuration information by using different beams.

Correspondingly, in S803, after receiving the different measurement configuration information sent by the serving network device by using the different beams, the terminal may determine, based on the location information of the terminal, that the terminal is located in a coverage area of a beam corresponding to which SSB, and then measure the SSB by using corresponding measurement configuration information. For example, if the terminal is located in the coverage area of the beam corresponding to the SSB 18, the terminal may measure the SSB by using the measurement configuration information 18.

In another possible implementation, in S802, the serving network device may send same measurement configuration information by using different beams. Measurement configuration information sent by the serving network device by using each beam includes the measurement configuration information 1 corresponding to the SSB 0 to measurement configuration information 255 corresponding to the SSB 255.

Correspondingly, in S803, after receiving the measurement configuration information sent by the serving network device, the terminal may determine, based on the location information of the terminal, that the terminal is located in a coverage area of a beam corresponding to which SSB, and then measure the SSB by using corresponding measurement configuration information. For example, if the terminal is located in the coverage area of the beam corresponding to the SSB 18, the terminal may measure the SSB by using the measurement configuration information 18.

In another possible implementation, in S802, the serving network device may send same measurement configuration information by using different beams. The measurement configuration information is similar to the measurement configuration information in Example 1 in Implementation 1. The following describes in detail a difference between the measurement configuration information and the measurement configuration information in Example 1 in Implementation 1 by using an example. For content other than the difference, refer to the descriptions of Example 1 in Implementation 1. For example, a format of the measurement configuration information may be:

```
SSB-MTC::={//Second measurement timing configuration information
      periodicityAndOffset {sf640, sf40} //A measurement periodicity is 640 ms, and an
offset step is 40 ms.
      duration {sf2} //The duration is 2 ms.
}
SSB-MTC4-r17::={//First measurement timing configuration information
      pci-List-r17 {Cell list 1}
      offset1-List-r17 {sf100, sf120, sf140, sf160, sf180, sf200, sf220}//An offset 1
corresponding to the cell list 1 is 100 ms, an offset
2 corresponding to the cell list 1 is 120 ms,
an offset 3 corresponding to the cell list 1 is
140 ms, an offset 4 corresponding to the cell list 1
is 160 ms, an offset 5 corresponding to the cell list 1 is 180 ms, an offset 6 corresponding to
the cell list 1 is 200 ms, and an offset 7 corresponding to the cell list 1 is 220 ms.
}
SSB-MTC4-r17::={//First measurement timing configuration information
      pci-List-r17 {Cell list 2}
      offset1-List-r17 {sf220, sf240, sf260, sf280, sf300, sf320, sf340}//An offset 1
corresponding to the cell list 2 is 220 ms, an
offset 2 corresponding to the cell list 2 is 240 ms,
an offset 3 corresponding to the cell list 2 is
260 ms, an offset 4 corresponding to the cell list 2
is 280 ms, an offset 5 corresponding to the cell list 2 is 300 ms, an offset 6 corresponding to
the cell list 2 is 320 ms, and an offset 7 corresponding to the cell list 2 is 340 ms.
}
```

For the second measurement configuration information, for example, an optimal SSB of the terminal in the serving cell is the SSB 18. Because the SSB 18 belongs to a third group of SSBs, the terminal may determine that an offset corresponding to one (a measurement occasion 2) of measurement occasions is 40 ms. Further, the terminal may offset forward by 40 ms based on the offset step 40 ms and using a start time location of the measurement occasion 2 as a reference, and use the offset as start measurement time of another measurement occasion (referred to as a measurement occasion 1), in other words, an offset of the measurement occasion 1 is 0 ms. In addition, the terminal may offset backward by 40 ms, use the offset as start measurement time of another measurement occasion (referred to as a measurement occasion 3), in other words, an offset of the measurement occasion 3 is 80 ms, and measure a fifth group of SSBs on the measurement occasion 3.

In this configuration manner, the terminal may measure a first group of SSBs on the measurement occasion 1, measure the third group of SSBs on the measurement occasion 2, and measure the fifth group of SSBs on the measurement occasion 3, so that measurement of SSBs such as {1, 2, 3, 17, 18, 19, 33, 34, 35} in the serving cell can also be completed.

It may be understood that 40 ms configured based on the second measurement timing configuration information may also be a maximum offset step. It can be learned from the SSB sending pattern shown in FIG. 6 that, a minimum offset step is 0 ms. Therefore, the terminal may separately offset forward and backward by 0 ms, 20 ms, and 40 ms, to obtain offsets of five measurement occasions in total, and respectively measure the first group of SSBs to the fifth group of SSBs on the five measurement occasions. In addition, if the maximum offset step configured based on the second measurement timing configuration information is 80 ms, the terminal may separately offset forward and backward by 20 ms, 40 ms, 60 ms, and 80 ms.

For the first measurement configuration information, the cell list 1 is used as an example. For example, the cell list 1 includes a cell 1a of a satellite 1. To ensure that an SSB of the cell 1a can be measured by a terminal at any location in an overlapping area between coverage of a serving cell and coverage of the cell 1a, for the cell list 1, a minimum value of an offset configured based on the first measurement timing configuration information should be a smallest value of all possible offsets corresponding to the cell 1a, and a maximum value of an offset corresponding to the cell list 1 should be a largest value of all possible offsets corresponding to the cell 1a.

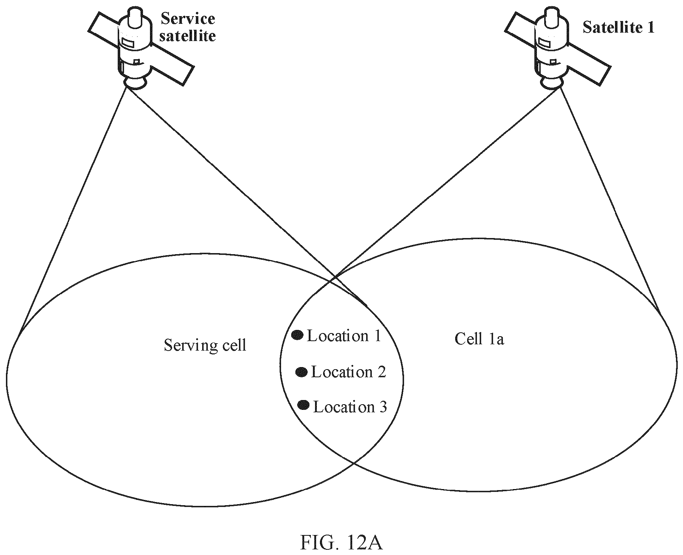

For example, as shown in FIG. 12A, it is assumed that the overlapping area between coverage of the serving cell and coverage of the cell 1a includes a location 1, a location 2, and a location 3. In this case, the satellite 1 may determine, based on an index of an SSB that is of the cell 1a and that needs to be measured by a terminal 1 at the location 1, M1 offsets corresponding to the cell 1a for the terminal 1 (where for details, refer to the foregoing descriptions of determining the M offsets by the satellite 1); may determine, based on an index of an SSB that is of the cell 1a and that needs to be measured by a terminal 2 at the location 2, M2 offsets corresponding to the cell 1a for the terminal 2; and may determine, based on an index of an SSB that is of the cell 1a and that needs to be measured by a terminal 3 at the location 3, M3 offsets corresponding to the cell 1a for the terminal 3. Then, a network device 1 corresponding to the satellite 1 may send (M1+M2+M3) offsets to the serving network device. The serving network device may use the smallest value of all the possible offsets (that is, the (M1+M2+M3) offsets) corresponding to the cell 1a as a minimum value of offsets corresponding to the cell list 1, and use the largest value of the (M1+M2+M3) offsets as the maximum value of the offsets corresponding to the cell list 1. Alternatively, a network device 1 corresponding to the satellite 1 may send only a largest value and a smallest value of (M1+M2+M3) offsets to the serving network device. It may be understood that the three locations are used as an example for description above. In a specific implementation, the satellite 1 may traverse all locations (where for example, a coverage area of a beam corresponding to one SSB may be understood as one location) in the overlapping area between coverage of the serving cell and coverage of the cell 1a, to obtain all the possible offsets corresponding to the cell 1a.

Further, for the cell list 1, the offset configured based on the first measurement timing configuration information may further include a plurality of offsets between the smallest value and the largest value, and the plurality of offsets may be obtained by progressively increasing the smallest value based on an offset step of 20 ms.

In this configuration manner, although a quantity of SSBs that need to be measured by the terminal increases, for the terminal in the idle state, because the terminal does not exchange data with a network side, data transmission efficiency is not affected, and only measurement overheads of the terminal are increased to some extent. However, measurement time is still far shorter than that in an existing solution.

Alternatively, for the cell list, the offsets configured by the network device are only a minimum offset and a maximum offset that correspond to the cell list. For example, a format of the measurement configuration information may be:

```
SSB-MTC::={//Second measurement timing configuration information
      periodicityAndOffset {sf640, sf40} //A measurement periodicity is 640 ms, and an
offset step is 40 ms.
      duration {sf2} //The duration is 2 ms.
}
SSB-MTC4-r17::={//First measurement timing configuration information
     pci-List-r17 {Cell list 1}
     offset1-List-r17 {sf100, sf220}//An offset 1 corresponding to the cell list 1 is 100 ms,
and an offset 2 corresponding to the cell list 1 is 220 ms.
}
SSB-MTC4-r17::={//First measurement timing configuration information
     pci-List-r17 {Cell list 2}
     offset1-List-r17 {sf220, sf340}//An offset 1 corresponding to the cell list 2 is 220 ms,
and an offset 2 corresponding to the cell list 2 is 340 ms.
}
```

In this case, the terminal may progressively increase the smallest value based on the offset step of 20 ms to obtain the plurality of offsets between the smallest value and the largest value. In this manner, overheads of the measurement configuration information can be reduced, and transmission resources can be saved.

In another possible implementation, in S802, the serving network device may send same measurement configuration information by using different beams. In this case, the terminal device may determine a start position of a measurement occasion of a current measurement periodicity based on a time location of an optimal SSB obtained by the terminal device in a previous measurement periodicity. The optimal SSB may be an SSB with highest RSRP obtained by the terminal device through measurement. The start position of the measurement occasion in the current measurement periodicity may be, for example, a first subframe on the measurement occasion.

Specifically, the serving network device may send the measurement configuration information to the terminal device, where the measurement configuration information may be used to configure a measurement periodicity, an offset, and duration. The terminal device may determine the first subframe on the measurement occasion in the current measurement periodicity based on the measurement configuration information and the time location of the optimal SSB obtained in the previous measurement periodicity.

For example, a frame number and a subframe number of the first subframe on the measurement occasion in the current measurement periodicity satisfy the following formula:

$$\text{SFN} \bmod T = \left( \text{SFN}_{SSB_{RSRP}} + \left( \text{FLOOR}(Offset/10) \right) \right) \bmod T$$

$$\text{subframe} = \left( \text{subframe}_{SSB_{RSRP}} + Offset \right) \bmod 10$$

$$T = \text{CEIL} \left( \frac{Periodicity}{10} \right)$$

SFN and subframe respectively represent the frame number and the subframe number of the first subframe on the measurement occasion in the current measurement periodicity, $SFN_{SSB\_RSRP}$ and $subframe_{SSB\_RSRP}$ respectively represent a frame number and a subframe number of the optimal SSB obtained by the terminal device in the previous measurement periodicity, *Periodicity* represents duration of the measurement periodicity, and *Offset* represents the offset.

It is assumed that the optimal SSB obtained by the terminal device in the previous measurement periodicity is an SSB #18. For example, if a time location of an SSB #0 in the previous measurement periodicity is a subframe 0 of a frame 0, a frame number and a subframe number of the SSB #18 are respectively $SFN_{SSB\_RSRP} = 4$ and $subframe_{SSB\_RSRP} = 0$. Refer to FIG. 6. When the optimal SSB obtained by the terminal device in the previous measurement periodicity is the SSB #18, to-be-measured SSBs in the current measurement periodicity may include {1, 2, 3}, {17, 18, 19}, and {33, 34, 35}.

In one manner, the measurement configuration information may be used to configure the measurement periodicity as 640 ms, the offset as 595 ms, and the duration as 100 ms. For example, a format of the measurement configuration information may be:

```
SSB-MTC::={
     periodicity AndOffset {sf640, sf595} //The measurement periodicity is 640 ms, and the
offset is 595 ms.
     duration {sf100} //The duration is 100 ms.
  }
```

In this case, according to the foregoing formula, the frame number and the subframe number of the first subframe on the measurement occasion in the current measurement periodicity may be calculated as follows:

$T$ = 64, subframe = 5, SFN = 63

It can be learned from the SFN and the subframe that, the start position of the measurement occasion in the current measurement periodicity is 5 ms before an SSB #1 in the current measurement periodicity. In addition, it can be learned from the duration of 100 ms (in other words, the duration of the measurement occasion is 100 ms) that, the terminal device is to measure all SSBs, to be specific, the SSB #1 to an SSB #40, in a first group to a fifth group in the current measurement periodicity. It can be learned that all to-be-measured SSBs are included.

In another manner, the measurement configuration information may be used to configure the measurement periodicity as 640 ms, offsets as 598 ms, 638 ms, and 38 ms, and the duration as 5 ms. For example, a format of the measurement configuration information may be:

```
SSB-MTC::={
     periodicityAndOffsetList {sf640, sf598, sf638, sf38}//The measurement periodicity is
640 ms, and the offsets are 598 ms, 638 ms, and 38 ms.
     duration {sf5}//The duration is 5 ms.
  }
```

In this case, for each offset, the terminal device may calculate the frame number and the subframe number of the first subframe on the measurement occasion in the current measurement periodicity, to obtain:

$$T = 64, \text{subframe} = 8, \text{SFN}_1 = 63, \text{SFN}_2 = 67, \text{SFN}_3 = 71$$

It can be learned from $SFN_1$, $SFN_2$, $SFN_3$ and the subframe that, a start position of a first measurement occasion in the current measurement periodicity is 2 ms before an SSB #1 in the current measurement periodicity, a start position of a second measurement occasion is 2 ms before an SSB #17 in the current measurement periodicity, and a start position of a third measurement occasion is 2 ms before an SSB #33 in the current measurement periodicity. In addition, it can be learned from the duration of 5 ms (in other words, the duration of the measurement occasion is 5 ms) that, the terminal device separately measures SSBs in a first group, a third group, and a fifth group, to be specific, the SSB #1 to an SSB #8, the SSB #17 to an SSB #24, and the SSB #33 to an SSB #40. It can be learned that all to-be-measured SSBs are included.

Similarly, for a neighboring satellite, when performing SSB measurement for the first time, the terminal device may measure a complete SSB sending periodicity, to determine an optimal SSB, then calculate, based on the measurement configuration information, a frame number and a subframe number of a first subframe on a measurement occasion in a next measurement periodicity, and perform measurement on the measurement occasion.

According to the foregoing method, the measurement occasion in the measurement periodicity is calculated by using the time location of the optimal SSB obtained by the terminal device as a reference, so that the network device can send unified measurement configuration information for different SSB beams in a broadcast manner without obtaining the location information of the terminal device. Correspondingly, the terminal device may independently perform specified measurement on limited to-be-measured SSBs of the service satellite and the neighboring satellite. In time (namely, an occasion corresponding to a non-to-be-measured SSB) other than the measurement occasion, the terminal device does not need to search for an SSB, and can normally receive downlink data. This can greatly improve SSB measurement efficiency and downlink data transmission efficiency.

In addition, when a satellite moves, the terminal device may perform sliding window measurement on SSBs of a serving cell and a neighboring cell that are specified by the network device, and does not need to report specific location information. This helps reduce transmission resource overheads.

The foregoing separately describes respective possible implementations for the terminal device in the connected state and the terminal device in the idle state. An embodiment of this application further provides a method, which may be applicable to a terminal device in a connected state, and may be applicable to a terminal device in an idle state.

Specifically, considering that an SSB beam in each direction covers an area range on the ground, a service satellite may send, to a neighboring satellite, information about an overlapping area or an overlapping location between coverage of the service satellite and coverage of the neighboring satellite. Further, the neighboring satellite may configure an appropriate SMTC parameter (for example, pci-List-r17 and offset-List-r17 shown above) based on an SSB beam corresponding to the area or the location, form a list of mapping between an area/a location and an SMTC parameter configuration, and send the list to the service satellite. For the terminal device in the connected state, the service satellite may obtain location information of the terminal device, and then perform an SSB measurement configuration based on the location information of the terminal device. Alternatively, for the terminal device in the idle state, the service satellite may broadcast a complete list, and the terminal device independently selects an SMTC parameter based on an obtained optimal SSB.

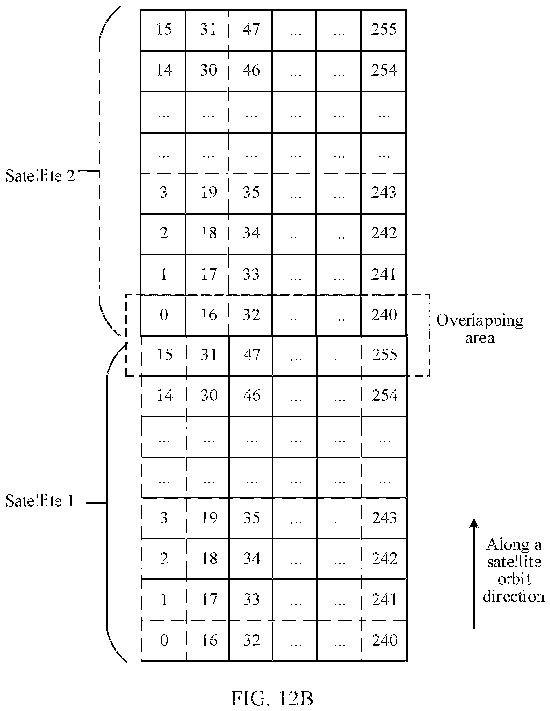

For example, refer to FIG. 12B. A satellite 1 and a satellite 2 are in a same orbit, and SSBs #15, #31, ..., and #255 of the satellite 1 and SSBs #0, #16, #32, ..., and #240 of the satellite 2 overlap each other in an area. The overlapping area may be considered as a handover zone. Based on a constellation configuration and a satellite coverage configuration, a size and a range of the overlapping area may be preset by the satellite 1, but an SSB coverage pattern of the satellite 2 in the overlapping area is unknown. The satellite 1 may send a coordinate location of the overlapping area to the satellite 2, or send a coverage area of each SSB in the overlapping area to the satellite 2. The satellite 2 determines, based on the received coordinate location or the received coverage area of the SSB of the satellite 1, an SSB index of the satellite 2 that covers a same location, configures a corresponding SMTC parameter, and exchanges the SMTC parameter with the satellite 1. For example, a coordinate range 1 or a coverage area of the SSB #15 of the satellite 1 corresponds to the SSB #0 of the satellite 2 and an SMTC parameter 1 (in other words, when the terminal device is located in the coverage area of the SSB #15 of the satellite 1, the terminal device may measure the SSB of the satellite 2 based on the SMTC parameter 1); a coordinate range 2 or a coverage area of the SSB #31 of the satellite 1 corresponds to the SSB #16 of the satellite 2 and an SMTC parameter 2 (in other words, when the terminal device is located in the coverage area of the SSB #31 of the satellite 1, the terminal device may measure the SSB of the satellite 2 based on the SMTC parameter 2); and so on. The satellite 1 may obtain a mapping relationship shown in Table 1 based on the received SMTC parameter of the satellite 2 and an SSB sending pattern of the satellite 1.

Table 1: Mapping relationship example

| SSB index of the satellite 1 | SSB index of the satellite 2 at a same location | SMTC configuration of the satellite 2 |
|---|---|---|
| SSB #15 | SSB #0 | SMTC parameter 1 |
| SSB #31 | SSB #15 | SMTC parameter 2 |
| ... | ... | ... |
| SSB #255 | SSB #240 | SMTC parameter 16 |

An interaction occasion between different network devices (or different satellites) may depend on specific interaction information. For example, different network devices may exchange location information of a terminal device in an overlapping area after the terminal device performs accessing (in other words, the terminal device is in the connected state); and different network devices exchange, before the terminal device performs accessing, or when an Xn interface is established between the different network devices, area information (for example, information about the overlapping area between the service satellite and the neighboring satellite, and the list of mapping between an area/a location and an SMTC parameter configuration) for starting SSB measurement of a neighboring cell.

According to the foregoing method, different network devices are enabled to exchange a corresponding SMTC parameter for a specific area or location, so that the service satellite can obtain a configuration of a to-be-measured SSB of the neighboring satellite. This method may be applied to a scenario in which the location information of the terminal device is known, and may also be applied to a scenario in which the location information of the terminal device is unknown. In addition, because the service satellite exchanges an SMTC configuration of a neighboring cell with the neighboring satellite for a specific area or location, instead of performing user-level signaling exchange for each terminal device that needs to perform mobility management, measurement requirements of neighboring cells in an entire area can be combined, to avoid a problem that a corresponding measurement parameter cannot be obtained when the location information of the terminal device is unknown, thereby reducing signaling exchange overheads.

The foregoing mainly describes the solutions provided in embodiments of this application from a perspective of interaction between communication apparatuses. It may be understood that, to implement the foregoing functions, the network device or the terminal may include corresponding hardware structures and/or software modules for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional units may be performed on the network device and the terminal based on the foregoing method examples. For example, division into each functional unit may be based on each corresponding function, or two or more than two functions may be integrated into one unit. The integrated unit may be implemented in a form of hardware, or may be implemented in a form of a software functional unit.

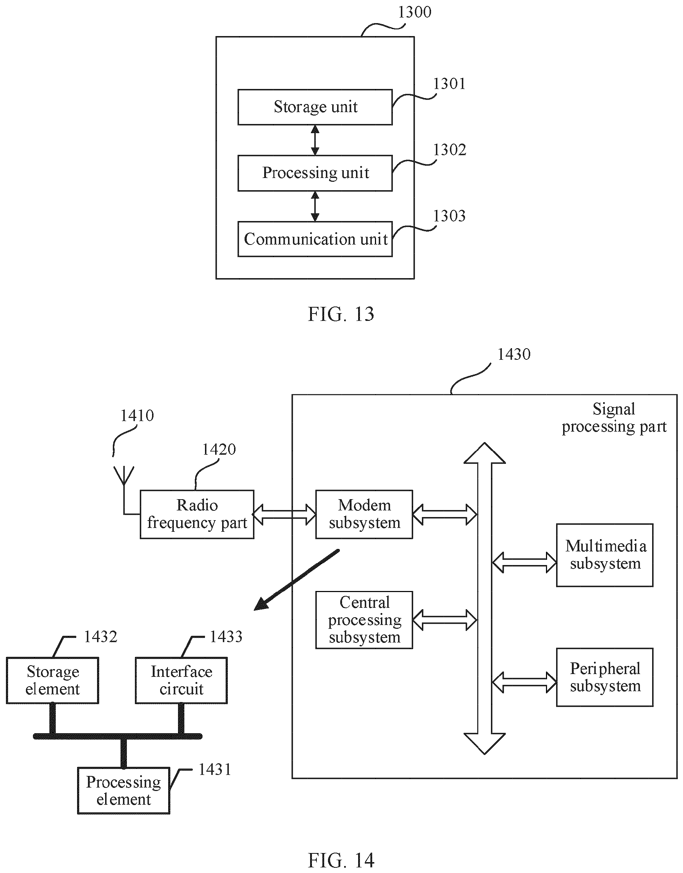

When an integrated unit is used, FIG. 13 is a possible example block diagram of an apparatus according to an embodiment of this application. As shown in FIG. 13, the apparatus 1300 may include a processing unit 1302 and a communication unit 1303. The processing unit 1302 is configured to control and manage an action of the apparatus 1300. The communication unit 1303 is configured to support communication between the apparatus 1300 and another device. Optionally, the communication unit 1303 is also referred to as a transceiver unit, and may include a receiving unit and/or a sending unit, respectively configured to perform a receiving operation and a sending operation. The apparatus 1300 may further include a storage unit 1301 configured to store program code and/or data of the apparatus 1300.

The apparatus 1300 may be the terminal in the foregoing embodiment. The processing unit 1302 may support the apparatus 1300 in performing actions of the terminal in the foregoing method examples. Alternatively, the processing unit 1302 mainly performs internal actions of the terminal in the method examples, and the communication unit 1303 may support communication between the apparatus 1300 and another device.

For example, in an embodiment, the communication unit 1303 is configured to receive measurement configuration information from a network device, where the measurement configuration information includes first measurement timing configuration information, the first measurement timing configuration information is used to configure a first cell list and M offsets corresponding to the first cell list, the M offsets respectively correspond to M measurement occasions, and M is an integer greater than 1. The processing unit 1302 is configured to measure a synchronization signal block SSB of each cell in the first cell list on the M measurement occasions, where the M measurement occasions include a first measurement occasion, and a first offset corresponding to the first measurement occasion is a time interval between a time domain start position of the first measurement occasion and a time domain start position of a measurement periodicity.

The apparatus 1300 may be the network device in the foregoing embodiment. The processing unit 1302 may support the apparatus 1300 in performing actions of the network device in the foregoing method examples. Alternatively, the processing unit 1302 mainly performs internal actions of the network device in the method examples, and the communication unit 1303 may support communication between the apparatus 1300 and another device.

For example, in an embodiment, the processing unit 1302 is configured to determine measurement configuration information. The communication unit 1303 is configured to send the measurement configuration information to a terminal, where the measurement configuration information includes first measurement timing configuration information, the first measurement timing configuration information is used to configure a first cell list and M offsets corresponding to the first cell list, the M offsets respectively correspond to M measurement occasions, and M is an integer greater than 1. The M measurement occasions include a first measurement occasion, and a first offset corresponding to the first measurement occasion is a time interval between a time domain start position of the first measurement occasion and a time domain start position of a measurement periodicity.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in a form of software invoked by the processing element.

In an example, a unit in any one of the foregoing apparatuses may be one or more integrated circuits configured to implement the foregoing method, for example, one or more application-specific integrated circuits (application-specific integrated circuits, ASICs), one or more microprocessors (digital signal processors, DSPs), or one or more field programmable gate arrays (field programmable gate arrays, FPGAs), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 14 is a diagram of a structure of a terminal according to an embodiment of this application. The terminal may be used in the communication system shown in FIG. 1, to implement operations of the terminal in the foregoing embodiment. As shown in FIG. 14, the terminal includes an antenna 1410, a radio frequency part 1420, and a signal processing part 1430. The antenna 1410 is connected to the radio frequency part 1420. In a downlink direction, the radio frequency part 1420 receives, via the antenna 1410, information sent by a network device, and sends, to the signal processing part 1430 for processing, the information sent by the network device. In an uplink direction, the signal processing part 1430 processes information of the terminal, and sends the information to the radio frequency part 1420. The radio frequency part 1420 processes the information of the terminal, and then sends processed information to the network device via the antenna 1410.

The signal processing part 1430 may include a modem subsystem, configured to process data at each communication protocol layer. The signal processing part 1430 may further include a central processing subsystem, configured to process an operating system and an application layer of the terminal. In addition, the signal processing part 1430 may further include another subsystem, for example, a multimedia subsystem or a peripheral subsystem. The multimedia subsystem is configured to control a camera, a screen display, or the like of the terminal. The peripheral subsystem is configured to connect to another device. The modem subsystem may be a separately disposed chip.

The modem subsystem may include one or more processing elements 1431, for example, include a main control CPU and another integrated circuit. In addition, the modem subsystem may further include a storage element 1432 and an interface circuit 1433. The storage element 1432 is configured to store data and a program. However, the program used to perform the methods performed by the terminal in the foregoing methods may not be stored in the storage element 1432, but is stored in a memory outside the modem subsystem, and is loaded by the modem subsystem for use. The interface circuit 1433 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units of the terminal that implement the steps in the foregoing method may be implemented by a program scheduled by a processing element. For example, the apparatus used for the terminal includes a processing element and a storage element. The processing element invokes a program stored in the storage element, to perform the method performed by the terminal in the foregoing method embodiments. The storage element may be a storage element located on a same chip as the processing element, that is, an on-chip storage element.

In another implementation, the program used to perform the methods performed by the terminal in the foregoing methods may be in a storage element located on a different chip from the processing element, that is, an off-chip storage element. In this case, the processing element invokes or loads the program from the off-chip storage element to an on-chip storage element, to invoke and perform the method performed by the terminal in the foregoing method embodiments.

In still another implementation, units of the terminal that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. The integrated circuits may be integrated together to form a chip.

Units of the terminal that implement the steps in the foregoing method may be integrated together, and implemented in a form of a SoC. The SoC chip is configured to implement the foregoing method. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented by a program invoked by the processing element, and functions of some units are implemented by the integrated circuit.

It can be learned that the foregoing apparatus used for the terminal may include at least one processing element and an interface circuit. The at least one processing element is configured to perform any one of the methods that are performed by the terminal and that are provided in the foregoing method embodiments. The processing element may perform some or all steps performed by the terminal in a first manner, to be specific, by invoking the program stored in the storage element; or may perform some or all steps performed by the terminal in a second manner, to be specific, by using a hardware integrated logic circuit in the processor element in combination with instructions; or may certainly perform, by combining the first manner and the second manner, some or all steps performed by the terminal.

The processing element herein is the same as that described above, and may be implemented by using a processor. A function of the processing element may be the same as a function of the processing unit described in FIG. 13. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory. A function of the storage element may be the same as a function of the storage unit described in FIG. 13. The storage element may be a memory, or may be a general name of a plurality of memories.

The terminal shown in FIG. 14 can implement all processes related to the terminal in the foregoing method embodiment. Operations and/or functions of modules in the terminal shown in FIG. 14 are respectively intended to implement the corresponding procedures in the foregoing method embodiment. For details, refer to the descriptions in the foregoing method embodiment. To avoid repetition, detailed descriptions are properly omitted herein.

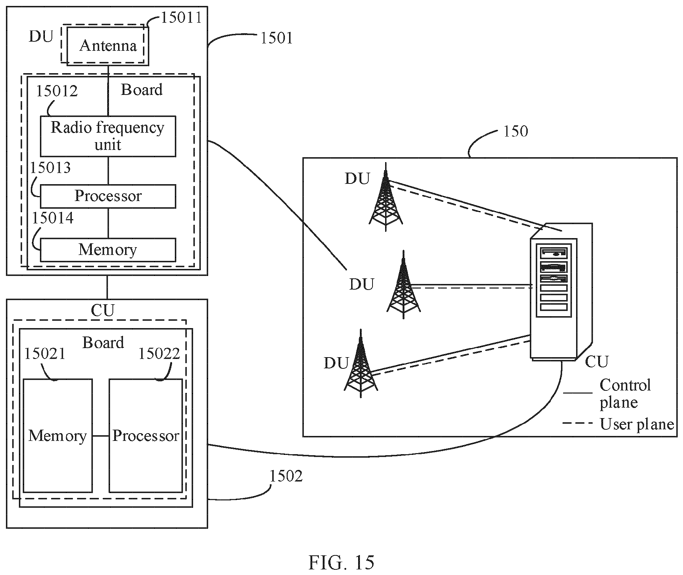

FIG. 15 is a diagram of a structure of a network device according to an embodiment of this application. The network device (or a base station) may be used in the communication system shown in FIG. 1, to perform functions of the network device in the foregoing method embodiment. As shown in FIG. 15, the network device 150 may include one or more DUs 1501 and one or more CUs 1502. The DU 1501 may include at least one antenna 15011, at least one radio frequency unit 15012, at least one processor 15013, and at least one memory 15014. The DU 1501 is mainly configured to: receive and send a radio frequency signal, perform conversion between the radio frequency signal and a baseband signal, and perform a part of baseband processing. The CU 1502 may include at least one processor 15022 and at least one memory 15021.

The CU 1502 is mainly configured to: perform baseband processing, control the network device, and the like. The DU 1501 and the CU 1502 may be physically disposed together, or may be physically separated, in other words, in a distributed base station. The CU 1502 is a control center of the network device, may also be referred to as a processing unit, and is mainly configured to complete a baseband processing function. For example, the CU 1502 may be configured to control the network device to perform an operation procedure related to the network device in the foregoing method embodiment.

In addition, optionally, the network device 150 may include one or more radio frequency units, one or more DUs, and one or more CUs. The DU may include at least one processor 15013 and at least one memory 15014, the radio frequency unit may include at least one antenna 15011 and at least one radio frequency unit 15012, and the CU may include at least one processor 15022 and at least one memory 15021.

In an example, the CU 1502 may include one or more boards. A plurality of boards may jointly support a radio access network (for example, a 5G network) with a single access indication, or may separately support radio access networks (such as an LTE network, a 5G network, or another network) with different access standards. The memory 15021 and the processor 15022 may serve the one or more boards. In other words, a memory and a processor may be disposed on each board. Alternatively, the plurality of boards may share a same memory and a same processor. In addition, a necessary circuit may further be disposed on each board. The DU 1501 may include one or more boards. A plurality of boards may jointly support a radio access network (for example, a 5G network) with a single access indication, or may separately support radio access networks (such as an LTE network, a 5G network, or another network) with different access standards. The memory 15014 and the processor 15013 may serve the one or more boards. In other words, a memory and a processor may be disposed on each board. Alternatively, the plurality of boards may share a same memory and a same processor. In addition, a necessary circuit may further be disposed on each board.

The network device shown in FIG. 15 can implement all processes related to the network device in the foregoing method embodiment. Operations and/or functions of modules in the network device shown in FIG. 15 are respectively intended to implement the corresponding procedures in the foregoing method embodiment. For details, refer to the descriptions in the foregoing method embodiment. To avoid repetition, detailed descriptions are properly omitted herein.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may also be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of the claims of this application and their equivalent technologies.

**Claims**

1. A communication method, wherein the method is applied to a terminal, and the method comprises:

   receiving measurement configuration information from a network device, wherein the measurement configuration information comprises first measurement timing configuration information, the first measurement timing configuration information is used to configure a first cell list and M offsets corresponding to the first cell list, the M offsets respectively correspond to M measurement occasions, and M is an integer greater than 1; and
   measuring a synchronization signal block SSB of each cell in the first cell list on the M measurement occasions, wherein
   the M measurement occasions comprise a first measurement occasion, and a first offset corresponding to the first measurement occasion is a time interval between a time domain start position of the first measurement occasion and a time domain start position of a measurement periodicity.

2. The method according to claim 1, wherein the method further comprises:
   sending a measurement value of the SSB of each cell in the first cell list to the network device.

3. The method according to claim 1 or 2, wherein the first measurement timing configuration information is further used to configure a to-be-measured SSB corresponding to the first cell list; and
   an index of the SSB of each cell in the first cell list measured on the M measurement occasions is the same as an index of the to-be-measured SSB corresponding to the first cell list.

4. The method according to any one of claims 1 to 3, wherein the measurement configuration information further comprises second measurement timing configuration information, and the second measurement timing configuration information is used to configure the measurement periodicity.

5. The method according to claim 4, wherein the second measurement timing configuration information is further used to configure first duration, and duration of each of the M measurement occasions is the first duration.

6. The method according to claim 5, wherein the second measurement timing configuration information is further used to configure N offsets, the N offsets respectively correspond to N measurement occasions, duration of each of the N measurement occasions is the first duration, and N is an integer greater than 1; and
the method further comprises:

measuring an SSB of at least one cell on the N measurement occasions, wherein the at least one cell comprises a serving cell of the terminal, wherein
the N measurement occasions comprise a second measurement occasion, and a second offset corresponding to the second measurement occasion is a time interval between a time domain start position of the second measurement occasion and the time domain start position of the measurement periodicity.

7. The method according to claim 4, wherein the second measurement timing configuration information is further used to configure second duration and a third offset, the third offset corresponds to a third measurement occasion, and duration of the third measurement occasion is the second duration; and
the method further comprises:

measuring an SSB of a serving cell of the terminal on the third measurement occasion, and receiving downlink data of the serving cell on the third measurement occasion, wherein
the third offset is a time interval between a time domain start position of the third measurement occasion and the time domain start position of the measurement periodicity.

8. The method according to claim 7, wherein the second duration is greater than 5 ms and less than or equal to duration of the measurement periodicity.

9. The method according to claim 7 or 8, wherein the first measurement timing configuration information is further used to configure third duration, and duration of each of the M measurement occasions is the third duration.

10. The method according to claim 6 or 7, wherein the second measurement timing configuration information is further used to configure a to-be-measured SSB of the serving cell; and
an index of the SSB of the serving cell measured on the N measurement occasions is the same as an index of the to-be-measured SSB of the serving cell.

11. A communication method, wherein the method is applied to a network device, and the method comprises:

determining measurement configuration information; and
sending the measurement configuration information to a terminal, wherein the measurement configuration information comprises the first measurement timing configuration information, the first measurement timing configuration information is used to configure a first cell list and M offsets corresponding to the first cell list, the M offsets respectively correspond to M measurement occasions, and M is an integer greater than 1, wherein
the M measurement occasions comprise a first measurement occasion, and a first offset corresponding to the first measurement occasion is a time interval between a time domain start position of the first measurement occasion and a time domain start position of a measurement periodicity.

12. The method according to claim 11, wherein the method further comprises:
receiving a measurement value of an SSB of each cell in the first cell list from the terminal.

13. The method according to claim 11 or 12, wherein the first measurement timing configuration information is further used to configure a to-be-measured SSB corresponding to the first cell list; and
an index of the SSB of each cell in the first cell list measured on the M measurement occasions is the same as an index of the to-be-measured SSB corresponding to the first cell list.

14. The method according to any one of claims 11 to 13, wherein the measurement configuration information further comprises second measurement timing configuration information, and the second measurement timing configuration information is used to configure the measurement periodicity.

15. The method according to claim 14, wherein the second measurement timing configuration information is further used to configure first duration, and duration of each of the M measurement occasions is the first duration.

16. The method according to claim 15, wherein the second measurement timing configuration information is further used to configure N offsets, the N offsets respectively correspond to N measurement occasions, duration of each of the N measurement occasions is the first duration, and N is an integer greater than 1; and the method further comprises:

   sending an SSB of at least one cell on the N measurement occasions, wherein the at least one cell comprises a serving cell of the terminal, wherein
   the N measurement occasions comprise a second measurement occasion, and a second offset corresponding to the second measurement occasion is a time interval between a time domain start position of the second measurement occasion and the time domain start position of the measurement periodicity.

17. The method according to claim 14, wherein the second measurement timing configuration information is further used to configure second duration and a third offset, the third offset corresponds to a third measurement occasion, and duration of the third measurement occasion is the second duration; and the method further comprises:

   sending an SSB of at least one cell on the third measurement occasion, and sending downlink data of the serving cell to the terminal on the third measurement occasion, wherein
   the third offset is a time interval between a time domain start position of the third measurement occasion and the time domain start position of the measurement periodicity.

18. The method according to claim 17, wherein the third duration is greater than 5 ms and less than or equal to duration of the measurement periodicity.

19. The method according to claim 17 or 18, wherein the first measurement timing configuration information is further used to configure third duration, and duration of each of the M measurement occasions is the third duration.

20. The method according to claim 16 or 17, wherein the second measurement timing configuration information is further used to configure a to-be-measured SSB of the serving cell; and
an index of an SSB of the serving cell measured on the N measurement occasions is the same as an index of the to-be-measured SSB of the serving cell.

21. The method according to any one of claims 11 to 20, wherein the first cell list comprises a serving cell of the network; and
the method further comprises:

   obtaining location information of the terminal;
   determining, based on the location information of the terminal, a first SSB corresponding to a beam that covers the terminal, wherein the first SSB is the SSB of the serving cell; and
   determining the M offsets based on the first SSB.

22. The method according to any one of claims 11 to 20, wherein the first cell list comprises the serving cell of the terminal; and
the sending the measurement configuration information to a terminal comprises:

   sending the measurement configuration information to the terminal by using a second SSB of the serving cell, wherein
   the M offsets are determined based on the second SSB.

23. A communication apparatus, comprising a processor, wherein the processor is coupled to a memory, and the memory stores a computer program; and the processor is configured to invoke the computer program in the memory, to enable the communication apparatus to perform the method according to any one of claims 1 to 10 or the method according to any one of claims 11 to 22.

24. A computer-readable storage medium, wherein the storage medium stores a computer program or instructions, and when the computer program or the instructions are executed by a computer, the method according to any one of claims 1 to 10 or the method according to any one of claims 11 to 22 is implemented.

25. A computer program product, wherein when a computer reads and executes the computer program product, the computer is enabled to perform the method according to any one of claims 1 to 10 or the method according to any one of claims 11 to 22.

FIG. 1

FIG. 2A

FIG. 2B

FIG. 3A

One synchronization signal burst set

5 ms

SSB #0    SSB #1    SSB #P    SSB #0    SSB #1    SSB #P

PBCH    PBCH    PBCH    PBCH    PBCH    PBCH

SSB #2
SSB #1
SSB #0

···PSS|PBCH|SSS|PBCH|PSS|PBCH|SSS|PBCH···PSS|PBCH|SSS|PBCH···PSS|PBCH|SSS|PBCH|PSS|PBCH|SSS|PBCH···PSS|PBCH|SSS|PBCH···

PBCH    PBCH    PBCH    PBCH    PBCH    PBCH

Synchronization signal burst set periodicity (20 ms)

FIG. 3B

Symbol number   0   1   2   3   4   5   6   7   8   9   10   11   12   13

15 kHz

FIG. 3C

Measurement
time window

A terminal
measures SSBs

Time

SSB sent by a
service satellite

SSB sent by a
neighboring satellite

FIG. 4

FIG. 5

Along a satellite
orbit direction

| 15 | 31 | 47 | ... | ... | 255 |
| 14 | 30 | 46 | ... | ... | 254 |
| ... | ... | ... | ... | ... | ... |
| ... | ... | ... | ... | ... | ... |
| 3 | 19 | 35 | ... | ... | 243 |
| 2 | 18 | 34 | ... | ... | 242 |
| 1 | 17 | 33 | ... | ... | 241 |
| 0 | 16 | 32 | ... | ... | 240 |

FIG. 6

Frequency

Measurement       Measurement       Measurement
time window 1     time window 2     time window 3

...

Time

640 ms

FIG. 7

| Terminal | | Network device |
|---|---|---|

S801: Determine measurement configuration information, where the measurement configuration information includes first measurement timing configuration information and/or second measurement timing configuration information

S802: Measurement configuration information

S803: Measure an SSB based on the measurement configuration information

FIG. 8

indicates a measurement occasion

Frequency

1  2  3  4  5  6  7  8  9

...

Time

640 ms

FIG. 9

FIG. 10

FIG. 11

FIG. 12A

| 15 | 31 | 47 | ... | ... | 255 |
|----|----|----|-----|-----|-----|
| 14 | 30 | 46 | ... | ... | 254 |
| ... | ... | ... | ... | ... | ... |
| ... | ... | ... | ... | ... | ... |
| 3 | 19 | 35 | ... | ... | 243 |
| 2 | 18 | 34 | ... | ... | 242 |
| 1 | 17 | 33 | ... | ... | 241 |
| 0 | 16 | 32 | ... | ... | 240 |
| 15 | 31 | 47 | ... | ... | 255 |
| 14 | 30 | 46 | ... | ... | 254 |
| ... | ... | ... | ... | ... | ... |
| ... | ... | ... | ... | ... | ... |
| 3 | 19 | 35 | ... | ... | 243 |
| 2 | 18 | 34 | ... | ... | 242 |
| 1 | 17 | 33 | ... | ... | 241 |
| 0 | 16 | 32 | ... | ... | 240 |

Satellite 2

Satellite 1

Overlapping area

Along a satellite orbit direction

FIG. 12B

1300

Storage unit — 1301

Processing unit — 1302

Communication unit — 1303

FIG. 13

1430

Signal processing part

1410

1420

Radio frequency part

Modem subsystem

Multimedia subsystem

Central processing subsystem

Peripheral subsystem

1432 — Storage element

1433 — Interface circuit

1431 — Processing element

FIG. 14

FIG. 15

# EP 4 583 561 A1

## INTERNATIONAL SEARCH REPORT

| International application No. |
|---|
| **PCT/CN2023/118547** |

### A. CLASSIFICATION OF SUBJECT MATTER

H04W24/02(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXT, DWPI, 3GPP: 卫星, 同步信号块, 测量时间配置, 小区列表, 偏移量, 时长, NTN, SSB, SMTC1, SMTC4, SSB-MTC4, list, PCI, offset, duration

### C. DOCUMENTS CONSIDERED TO BE RELEVANT

| Category* | Citation of document, with indication, where appropriate, of the relevant passages | Relevant to claim No. |
|---|---|---|
| X | QUALCOMM INC. "Multiple SMTC configurations" *3GPP TSG-RAN WG2 Meeting #113bis-e, R2-2103057*, 20 April 2021 (2021-04-20), section 2 | 1-5, 11-15, 23-25 |
| A | QUALCOMM INC. "Multiple SMTC configurations" *3GPP TSG-RAN WG2 Meeting #113bis-e, R2-2103057*, 20 April 2021 (2021-04-20), section 2 | 6-10, 16-22 |
| A | CN 114128359 A (APPLE INC.) 01 March 2022 (2022-03-01) entire document | 1-25 |
| A | WO 2021258776 A1 (HUAWEI TECHNOLOGIES CO., LTD.) 30 December 2021 (2021-12-30) entire document | 1-25 |
| A | WO 2022157735 A1 (TELEFONAKTIEBOLAGET LM ERICSSON (PUBL)) 28 July 2022 (2022-07-28) entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 October 2023** | **30 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118547**

| Patent document cited in search report | | | Publication date (day/month/year) | Patent family member(s) | | | Publication date (day/month/year) |
|---|---|---|---|---|---|---|---|
| CN | 114128359 | A | 01 March 2022 | US | 2022191898 | A1 | 16 June 2022 |
| | | | | WO | 2020231831 | A1 | 19 November 2020 |
| | | | | EP | 3967085 | A1 | 16 March 2022 |
| WO | 2021258776 | A1 | 30 December 2021 | CN | 113840359 | A | 24 December 2021 |
| WO | 2022157735 | A1 | 28 July 2022 | | None | | |

Form PCT/ISA/210 (patent family annex) (July 2022)

**EP 4 583 561 A1**

**Patent documents cited in the description**

- CN 202211165120

- CN 202310630951